(19) Europäisches Patentamt / European Patent Office / Office européen des brevets

(11) **EP 4 585 957 A1**

(12) **DEMANDE DE BREVET EUROPEEN**

(43) Date de publication:
**16.07.2025 Bulletin 2025/29**

(21) Numéro de dépôt: **24150997.5**

(22) Date de dépôt: **09.01.2024**

(51) Classification Internationale des Brevets (IPC):
**G01S 5/02** *(2010.01)*      **G01S 19/50** *(2010.01)*
**B61L 25/02** *(2006.01)*     **G01C 21/00** *(2006.01)*
**G01S 5/08** *(2006.01)*      **G01S 19/14** *(2010.01)*
**G01S 19/21** *(2010.01)*     **G01S 19/22** *(2010.01)*

(52) Classification Coopérative des Brevets (CPC):
**G01S 5/02528; B61L 25/025; G01C 21/005;**
**G01S 5/02695; G01S 19/50;** B61L 2205/04;
G01S 5/0215; G01S 5/0218; G01S 5/08;
G01S 19/14; G01S 19/21; G01S 19/22;
G01S 2205/01

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(71) Demandeur: **TILT-GNSS SAS**
**26120 Upie (FR)**

(72) Inventeur: **Revol, Marc**
**26120 Upie (FR)**

Remarques:
Revendications modifiées conformément à la règle 137(2) CBE.

(54) **FILTRAGE ADAPTÉ À COÏNCIDENCE D'ANGLES POUR DÉTECTION DE PASSAGE EMBARQUÉE D'UN MOBILE SE DEPLAÇANT SUR UNE TRAJECTOIRE CONTRAINTE**

(57)     Procédé de détection de passage embarquée, sans synchronisation temporelle et fréquen-tielle pré-alable précise entre émetteurs et récepteur, d'un mobile se déplaçant sur une trajectoire contrainte, le dit procédé réalisant un filtrage adapté spatial sur les directions pré-dites d'émetteurs de référence aux points de passages attendus,

Suivant des modes particuliers de réalisation, le procédé comprend notamment :
- un traitement de formation de voies de directivité réalisé par intégration cohérente des signaux reçus, après compensation de la phase de porteuse, correspondant à la projection du déplacement du mobile dans la direction d'émission de chaque signal de référence, supposé à phase cohérente,
- dans un mode de réalisation mettant en oeuvre les signaux GNSS, un filtrage adapté multi-dimensionnel impliquant simultanément le filtrage spatial sur les direc-tions d'arrivée des signaux de références et les filtrages en temps et fréquence, sur retards et dopplers attendus des signaux de référence,

[Fig.6]

Fig.6A      Fig.6B

(𝒯) Trajectoire du mobile

EP 4 585 957 A1

# EP 4 585 957 A1

## Description

### Résumé de l'invention

L'invention a pour objet un procédé de détection de passage embarquée, ne nécessitant pas une synchronisation temporelle et fréquentielle préalable précise entre émetteurs et récepteur, d'un mobile se déplaçant sur une trajectoire contrainte en un ou plusieurs points particuliers de cette trajectoire, le procédé permettant de réaliser un filtrage adapté spatial sur les directions attendues d'émetteurs de référence aux points de passage, relativement aux directions d'arrivée réelles des signaux.

Suivant des modes particuliers de réalisation, le procédé de détection de passage embarquée d'un mobile comprend une ou plusieurs des caractéristiques suivantes, prises isolément ou en combinaison :

- détection de passage embarquée par recherche de coïncidence des directions reçues et des directions prédites en gisement des sources d'émission de référence aux points de passage, caractérisée en ce que les directions d'incidence des signaux de référence soient extraites par traitement spatial d'antenne et comparées, pour minimisation, avec les directions attendues des sources d'émission au point de passage de référence selon une métrique d'écart angulaire
- détection de passage embarquée par filtrage adapté spatial des directions attendues des sources d'émission de référence aux points de passage, caractérisée en ce que la détection de coïncidence en gisement des directions d'arrivée des signaux attendus, au point de passage de référence, est mise en oeuvre par une formation de voies de directivité qui réalise un filtrage adapté spatial, prépositionné dans lesdites directions d'arrivées des sources d'émission pour maximisation de la puissance multi-sources reçue
- détection de passage embarquée, caractérisée en ce que le traitement de formation de voies de directivité est réalisé par intégration cohérente des signaux reçus, après compensation de la phase du signal reçu, correspondant à la projection du déplacement du mobile dans la direction d'émission de chaque signal de référence, supposé à phase cohérente, le tout formant ainsi un traitement de filtrage spatial, dit antenne à synthèse d'ouverture.
- détection de passage embarquée d'un mobile, mettant en oeuvre les signaux GNSS et associant dans un filtrage adapté multi-dimension le domaine spatial basé sur les directions d'arrivée des signaux de références et les domaines temporel et fréquentiel, basés sur les retards et fréquences attendus des signaux de référence

Un mode de réalisation du procédé selon l'invention s'applique de façon préférée au cas où les signaux de référence sont les signaux GNSS, le traitement spatial est un traitement d'antenne à synthèse d'ouverture, le domaine d'application est celui des balises virtuelles pour le rail

### Domaine de l'invention

La détection du passage d'un mobile évoluant sur une trajectoire contrainte, ainsi que la datation précise de ce passage, présente de nombreux intérêts permettant entre autre le recalage des instruments de navigation proprioceptifs embarqués, qui peuvent présenter des dérives temporelles (capteurs inertiels, odomètres, ....), mais aussi être utilisée directement pour des services de géolocalisation pour les applications de mobilité, telles que le péage, le guidage, le chronométrage, le zonage (« geofencing » et « geocaging »).

Cette détection de passage embarquée, plus particulièrement et depuis longtemps mise en oeuvre par des moyens électromécaniques pour les applications ferroviaires, est maintenant réalisées aux moyens de capteurs électromagnétiques à déclenchement de passage telles que des balises RFID ou des capteurs optiques Lidar ou Radar.

Les coûts d'installation et de maintenance de tels capteurs en limitent cependant le déploiement dans le cas d'infrastructures à grande dimension, telles que les voies ferroviaires (en raison du grand nombre de capteurs et de la maintenance des installations latérales), bien que ce type de solution ait déjà été retenu par les standards de navigation ferroviaires (ETCS level2).

Plusieurs solutions alternatives sont en cours d'évaluation dans le domaine ferroviaire, telles que la mise en place de moyens de navigation embarqués autonomes, mettant en oeuvre les systèmes de positionnement par radio-navigation GNSS hybridés ou non avec des capteurs proprioceptifs inertiels (UMI), de poursuite optique (SLAM), ou encore de reconnaissance de l'environnement (Lidar, Optique, ...). Les travaux en cours ont principalement pour objectif d'améliorer la sécurité de ces solutions afin d'assurer la continuité et surtout l'intégrité des informations de navigation fournies, ceci afin de pouvoir envisager leur utilisation pour une navigation plus autonome.

Une approche alternative à de tels systèmes de navigation autonomes a été proposée dans le brevet EP3306272A1 [D1] (« Procédé de localisation ponctuelle d'un véhicule évoluant sur une trajectoire contrainte et système associe »). Elle consiste à réaliser le recalage de la localisation des instruments de navigation bord sur la base de balises dites virtuelles, sur la base d'une datation de la détection de passage embarquée en une position particulière connue, réalisée à partir d'une prédiction des signaux GNSS à cette position (ou plus généralement de radionavigation, ou encore tous types de signaux d'opportunité de communication ou de positionnement cohérents et stationnaires en temps et dans l'espace, diffusant des codes d'étalement large bande de synchronisation temporelle)

Ce principe dit de *détection à l'affut des signaux,* est dédié à la détection du passage au niveau de positions de référence (dites *balises*) à partir de signaux de radionavigation. Il utilise la connaissance du déplacement du mobile sur sa trajectoire contrainte, ainsi que la possibilité de prédire précisément les signaux GNSS au moment du passage sur la position de la balise, mettant en cela à profit le déterminisme et à la cohérence temporelle et spatiale de ces signaux.

**Problème technique**

Classiquement, les signaux de radionavigation sont conçus pour pouvoir réaliser un transfert de temps et de fréquence (dite « synchronisation» par la suite) entre le système émetteur (définissant la base de temps de référence) et le récepteur (utilisant une base de temps locale), et de là, connaissant la position-vitesse des émetteurs sur la base de temps de référence, de réaliser en complément l'estimation de la position et de la vitesse du porteur.

Cette même synchronisation des bases de temps émetteurs et récepteur est mise en oeuvre pour prédire le retard et le doppler des signaux de référence (de radionavigation) pour les points de passage de référence sur la trajectoire.

Dans le cas de ladite méthode de *détection à l'affut* des signaux, mise en oeuvre pour la détection de la date de passage, un filtrage adapté est réalisé selon les retards et les dopplers (dits « phases de code et de porteuse »), par corrélation des signaux GNSS reçus avec les signaux attendus pour les positions possibles de passage.

Cette approche, bien qu'offrant une solution plus robuste que les solutions classiques de mise en oeuvre des signaux GNSS au travers d'un PVT, souffre comme les autres solutions du niveau faible des signaux en réception et de la déformation des fonctions de corrélation obtenues après filtrage adapté en présence d'interférences et de trajets multiples.

D'autre part, la transformation d'un retard de propagation en une position sur une trajectoire contrainte n'est pas toujours univoque, car dépendant de l'angle entre la direction de déplacement du mobile et la direction d'incidence du signal. Les ambiguïtés spatiales liées à la répartition géométrique des sources qui en résultent dépendent aussi des puissances relatives des signaux, un signal ambigu significativement plus puissant que les autres pouvant entraîner avec lui toute la résolution. Bien que le nombre de sources de signaux soit en général suffisant pour introduire une diversité d'angles d'arrivée qui rend rares de telles situations d'ambiguïté de résolution, il est nécessaire de limiter leur occurrence et de pouvoir en surveiller le risque d'apparition dans le cas des applications de navigation critiques qui nécessitent un niveau élevé de disponibilité et d'intégrité des solutions de localisation.

La présente invention propose une solution qui, dans ses modes de réalisation les plus directs, ne nécessite pas de synchronisation préalable des bases de temps émetteurs et récepteur, et permet de limiter le risque d'ambiguïté de résolution spatiale tout en augmentant la sensibilité de détection des signaux en réception (le rapport signal à bruit), de réduire la vulnérabilité (le biais) des mesures vis-à-vis des trajets multiples et d'interférences, et aussi d'offrir une approche alternative ou complémentaire à la prédiction des seuls temps et fréquence de réception pour augmenter la confiance de la mesure de date de passage obtenue (dite « intégrité de la mesure »).

**Etat de la technique antérieure**

Le brevet EP3306272A1 [D1] (« *Procédé de localisation ponctuelle d'un véhicule évoluant sur une trajectoire contrainte et système associé* ») décrit un principe de synchronisation en temps, fréquence et position d'un système de localisation installé à bord d'une plateforme mobile se déplaçant sur une trajectoire connue et contrainte.

Ledit principe de *détection à l'affut des signaux* y est mis en oeuvre pour réaliser la détection du passage du train au niveau de balises de référence à partir de signaux de radio-navigation. Il met à profit la connaissance du plan de la voie de déplacement pour prédire précisément, pour un ensemble d'émetteurs et récepteur synchronisés en temps et fréquence, les phases de code (retards) et de porteuse (doppler) des signaux GNSS reçues au moment du passage du mobile sur la position de chaque balise.

Cette approche réalise un filtrage adapté en temps et fréquence sur l'ensemble des signaux reçus (multi-sources d'émission de référence) offrant une meilleure précision et disponibilité sur la date de passage du train qu'un récepteur GNSS classique qui poursuit individuellement les signaux avant de combiner les mesures extraites.

Le brevet décrit un procédé pour estimer la date réalisant la meilleure coïncidence conjointe des instants de réception et des dopplers prédits aux points de passage avec ceux des signaux reçus.

Le traitement consiste à réaliser au temps courant une corrélation (complexe) entre le signal reçu sur l'antenne bord et l'ensemble des codes locaux des sources d'émission de référence visibles, synchronisés sur les phases (du code et de la porteuse) attendues pour la position de la balise de référence située sur le passage du train, et à rechercher à maximiser cette corrélation, en vue d'obtenir la date de passage du mobile au plus près de la position de la balise virtuelle.

Les techniques de monitoring de l'intégrité de la date de passage délivrée par un tel procédé sont envisagées afin de réduire le plus possible le risque que l'erreur d'estimation dépasse un seuil de tolérance, mais la capacité de détection de défauts de tels algorithmes reste limitée à des barrières de niveau importants par rapport aux précisions attendues par les applications, en raison des délais d'alarme qui doivent rester faibles (typiquement inférieurs à la seconde) et des risques de non intégrité qui doivent rester très faibles dans le cas d'applications de transport.

**Défauts des solutions existantes**

La cohérence entre signaux réels reçus et signaux attendus aux différentes positions de passage ne peut pas être parfaitement assurée, principalement en raison :

i) De l'erreur de synchronisation du temps local du récepteur sur le temps GNSS liée à l'imprécision de son estimation, voire aux biais résiduels d'instabilité des horloges,
ii) Des erreurs système et de propagations qui ne sont pas parfaitement corrigées par les modèles (ionosphérique , tropospherique, bras de levier d'antenne, erreur d'éphémérides et de synchronisation de temps satellites, ...)
iii) Du géoréférencement des positions attendues, lui-même entaché d'erreur

Les fonctions de corrélations estimées des différents satellites ne sont donc pas toutes centrées exactement autour du même maximum de puissance, les écarts de synchronisation entre signaux satellites reçus (horloge satellites, retards de propagation ionosphérique et troposphérique, trajets multiples) entraînant des décalages de la fonction de corrélation spatiale.

Pour pallier l'effet de cet étalement, et donc le bruit d'estimation de la date de passage au maximum, il est nécessaire de corriger lors de la génération des codes locaux les phases de codes attendues des satellites à l'aide des modèles d'erreur disponibles, fournis par ailleurs par un récepteur GNSS bord ou via une liaison d'assistance (modèle d'erreur d'horloge, modèles d'erreur troposphérique & ionosphérique), pour les réduire à quelques mètres (hors trajets multiples et interférences).

Les signaux satellitaires et la précision des mesures GNSS restent aussi très sensibles, malgré l'expansion des codes d'étalement et l'augmentation de la puissance de transmission, à la présence de sources d'interférences et à l'existence de trajets réfléchis qui déforment la forme des fonctions de corrélation sur laquelle s'appuie la méthode de filtrage adaptée temporelle pour la détection des instants de passage.

La seule résolution des temps et fréquences des signaux reçus ne préserve pas du risque d'ambiguïté spatiale de la position résolue, notamment lorsque la méthode de détection à l'affût est appliquée

**Solution au problème**

Une voie d'amélioration pour réduire la vulnérabilité et les ambiguïtés de la détection de passage à l'affût, en cas de disponibilité réduite des signaux et en présence de trajets multiples et de sources interférences, passe par l'utilisation d'antennes réseaux. Dans une mise en oeuvre particulière, cette solution consiste à asservir le pointage de l'antenne électronique dans les directions des différentes sources d'émission de référence. Cette approche commence à se développer dans le cadre des récepteurs GNSS pour applications critiques. Cependant, la solution impose des tailles d'antennes contraignantes, ajoute une complexité matérielle pour les étages RF (autant de voies que d'éléments d'antenne) ainsi qu'une charge de calcul importante pour le logiciel.

Une approche alternative basée sur l'hybridation serrée des mesures de phases de code et de porteuse avec une référence inertielle supplémentaire, ne réalise que partiellement les fonctionnalités d'une antenne à synthèse d'ouverture réelle :

i) L'hybridation serrée s'appuie uniquement sur les mesures issues des boucles de poursuite des récepteurs (PLL) pour extraire les mesures de phase de porteuse ; elle ne permet de "gagner" en intégration cohérente des mesures que dans la direction du signal en cours de poursuite, initialisée et accrochée en phase d'acquisition sur le trajet principal. Elle ne crée pas d'effet de directivité à synthèse d'ouverture, la phase de réception du signal n'étant pas maintenue stationnaire en suivant le déplacement du mobile.
ii) Elle ne permet pas de contraindre l'« orientation » de l'intégration cohérente dans des directions différentes de celle du signal en poursuite (correspondant en général au trajet direct),
iii) Le couplage serré ne fonctionne qu'en poursuite établie et n'est pas utilisé en phase d'acquisition des signaux faibles, notamment il ne permet pas de réaliser une acquisition rapide sur des signaux directs ou réfléchis.

La solution définie selon la présente invention repose sur l'application d'un traitement d'antenne à synthèse d'ouvertures à la réception de signaux cohérents. Elle permet de réaliser une compensation de phase stationnaire en réception en direction des différentes sources d'émission des signaux de référence, et, ceci sans nécessité un traitement de réseau d'antennes. Cette approche est décrite dans les brevets EP2410352A1 [D2] (« Dispositif d'antenne à ouverture synthétique de réception de signaux d'un système comprenant une porteuse et des moyens de détermination de sa trajectoire »), en vue d'améliorer la robustesse en poursuite des signaux GNSS, et FR3038390A1 [D3] («Procédé de localisation d'une source de brouillage de signaux d'un système de navigation par satellites et système associe » ) en vue de réaliser une surveillance de source de brouillage dans l'environnement de réception d'une plateforme mobile.

Cependant ces brevets ne décrivent pas l'application du traitement d'antenne à synthèse d'ouverture en vue d'améliorer la robustesse de la détection de passage embarquée par une méthode spécifique de détection à l'affût.

## Avantages apportés

L'objectif général du procédé et du système selon l'invention est de détecter le passage d'un mobile, par exemple un train, en des points particuliers de son déplacement sur une trajectoire contrainte, par réalisation d'un filtrage adapté spatial à coïncidence d'angles, basé sur la prédiction des angles d'arrivée des signaux de référence aux points de passage attendus, fonctions de la position des sources d'émission, lesdits points particuliers correspondant à des positions prédéterminées et connues,

La présente invention décrit une solution de filtrage adapté spatial à coïncidence d'angles d'arrivée, basée sur la géométrie des angles d'arrivée des signaux de référence attendus aux points de passage particuliers de la trajectoire, afin de réaliser une première détection de proximité du point de passage et d'améliorer la robustesse de la détection fournie par d'éventuels filtrages adaptés temporel & fréquentiel supplémentaires, en éliminant par filtrage spatial les signaux interférents qui sont reçus dans des directions différentes de celles des sources d'intérêt.

L'approche proposée par cette invention permet, dans une réalisation où le filtrage adapté est effectué conjointement sur les angles, le temps et la fréquence des signaux reçus, réduisant ainsi les niveaux des trajets multiples et des interférences, d'améliorer la robustesse et la disponibilité de l'estimation des instants d'arrivée (phase de code) et des dopplers (phase de porteuse) pour une estimation précise de la date de passage.

Cette première détection de passage embarquée en un point de référence de la trajectoire permet aussi de consolider la confiance sur la détection et la date de passage obtenues par le filtrage adapté retard-fréquence, la détection des mesures d'angles par filtrage adapté spatial reposant sur un principe de traitement fondamentalement différent et indépendant du principe de localisation par filtrage adapté des phases de code et de porteuse des signaux.

Cette même quasi-indépendance des principes de mesures participe aussi à rendre la localisation ainsi obtenue plus robuste aux éventuelles attaques de la localisation du mobile par leurrage des signaux reçus.

Le traitement d' antenne à synthèse d'ouverture permet l'obtention de gains de directivité importants dans n'importe quelle direction visée, sans commune mesure avec ceux atteignables par des antennes en réseau du fait de l'encombrement et du nombre d'antennes élémentaires qui seraient alors nécessaires, permettant ainsi non seulement d'améliorer la sensibilité de réception sur les trajets directs depuis l'émetteur, mais aussi de réduire l'impact des trajets réfléchis ou des interférence dans les autres directions.

Cette réduction de l'impact des trajets multiples permet notamment de limiter la déformation des fonctions de corrélation après filtrage adapté et ainsi de pouvoir réduire les rayons de protection associés au monitoring de l'intégrité de l'algorithme de datation du passage aux positions de référence.

## Solution technique

La solution selon l'invention réalise une estimation de la date de passage d'un mobile se déplaçant selon une trajectoire connue et contrainte, en un ou plusieurs points de référence de cette trajectoire, sans contrainte de synchronisation précise. On définit ici la synchronisation précise tout transfert de temps entre systèmes réalisé avec une précision inférieure à 1ms, typiquement atteignable avec des moyens de transfert de temps GNSS.

La méthode « détection de passage à l'affût » du brevet [D1] décrit une première solution de détection de passage embarquée d'un mobile basée sur la coïncidence des temps et fréquence reçus de signaux de référence synchronisés. Ces signaux de référence sont définis au temps courant par leurs phases de code et de porteuse correspondant aux retards et aux dopplers des signaux reçus, prédites à partir de la position connue du point de passage de référence sur la trajectoire, ainsi que de la vitesse du porteur, des positions et vitesses des émetteurs et des conditions de propagation des signaux.

Dans un domaine de fonctionnement où, pour un encadrement donné de l'incertitude de position et de l'erreur de temps d'arrivée, les angles d'arrivée de signaux par rapport à la direction de déplacement sont définis de façon univoque, à un instant donné, par les positions des émetteurs mobiles et d'un récepteur mobile se déplaçant sur une trajectoire contrainte, il est possible de déterminer une date de passage unique sur la base de l'estimation de ces angles d'arrivée pour un point de référence de cette trajectoire.

La présente invention décrit, dans une de ses réalisations, une solution de filtrage adapté spatial limitée à la coïncidence d'angles, basée sur la seule prédiction des angles d'arrivée des signaux de référence aux points de passage attendus, fonctions de la position des sources d'émission, afin de réaliser une première détection de passage embarquée à proximité du point de référence de la trajectoire et d'améliorer la robustesse de la détection fournie par le filtrage adapté temporel & fréquentiel

Le filtrage adapté est réalisé entre les signaux de référence reçus par le porteur et les signaux attendus au point de passage de référence considéré, et suppose connues, en continu et dans un même repère, les positions des émetteurs ainsi que la position précise des points de référence sur la trajectoire.

La méthode s'appuie sur un filtrage spatial réalisé par traitement d'antenne et adapté aux directions des sources d'émission attendues pour chacune des positions de référence. Ce filtrage spatial permet en outre une réduction des trajets multiples et interférences arrivant sur l'antenne dans les autres directions.

La présente invention décrit aussi, dans d'autres réalisations, une solution permettant, dans une approche globale faisant intervenir simultanément les coïncidences de temps de fréquence et d'angle, d'ajouter les nouvelles informations d'angle des signaux attendus pour améliorer l'efficacité du filtrage adapté.

Le filtrage adapté spatial complète en cela le traitement de filtrage adapté temporel et fréquentiel tel que proposé dans le brevet [D1], qui exploite les seules informations de retard et de doppler des signaux attendus, en assurant une meilleure sensibilité vis-à-vis des signaux reçus et une protection contre les effets des signaux interférents et les trajets multiples.

Aux informations portées par les phases de code et de porteuse, on ajoute ainsi la connaissance des directions prédites des signaux de référence pour la position de référence attendue afin de compléter le filtrage adapté en retard (sur le code) et en fréquence (sur la porteuse), par un filtrage spatial (en gisement et élévation) appliqué sur l'ensemble des paramètres de signaux reçus

On réalise de cette façon un triple filtrage :

i) Dans le domaine des temps, permettant de s'adapter aux retards (phase de code) attendus des signaux au moment du passage de la plateforme sur la position de référence de la trajectoire

ii) Dans le domaine des fréquences, permettant de s'adapter aux dopplers (phase de porteuse) des signaux au moment du passage de la plateforme sur la position de référence de la trajectoire

iii) Dans le domaine des vecteurs d'onde, permettant de s'adapter à la direction des sources d'émission de référence à l'instant de passage à la position de référence

La méthode de détection de passage embarquée s'appuyant sur des caractéristiques complémentaires des signaux reçus (selon les angles, retards et fréquences) répondant à des phénomènes physiques indépendants, elle permet de consolider le rapport signal à bruit de la détection, et de réduire l'imprécision et les éventuelles ambiguïtés de détection par l'estimateur du maximum de vraisemblance dans un espace à 3 dimensions décrit par les angles, le retard et le doppler des signaux reçus.

Profitant du nouvel apport du traitement adapté spatial pour évaluer la variabilité de la mesure de vraisemblance selon les angles au moment du passage au point de référence attendu, la méthode de détection de passage embarquée basée sur le filtrage spatial offre aussi la possibilité de réaliser une détection de la date de passage, basée sur l'évaluation de la répartition de la puissance angulaire des signaux reçus selon une variété de directions adjacentes traitées en parallèle. Pour mémoire, les méthodes de détection de passage embarquée basées sur la seule détection d'un maximum de puissance au cours du temps nécessitent une cadence de test rapide et d'attendre que le mobile ait dépassé significativement la position du point de passage attendu afin de détecter un maximum de puissance en fonction du temps, impliquant la prise en compte de la vitesse du porteur et de mémoriser localement les sorties pour reconstituer la date effective et précise de passage.

La méthode de détection et de datation précise du passage selon l'invention, dite des voies adjacentes, consiste à créer en parallèle au moins 3 voies de directivités équidistantes en gisement, se recoupant spatialement à -3dB.

Les sorties en puissance de ces voies servent à construire un critère de détection de passage embarquée de la position de référence, Sigma-Delta ($\Sigma/\Delta$), basé sur la constatation qu'au moment du passage au point de référence, la direction de la voie centrale sera parfaitement adaptée au gisement de la direction attendue pour chacun des signaux, et que, ainsi, la voie centrale (orientée vers chacun des signaux attendus) est de puissance maximale et que les voies latérales sont symétriquement de même puissance.

Une estimation possible, mais pas unique, de la date de passage peut être décrite sous une forme restreinte à 3 voies :

$$t_p(P_0^i) := Max_t\left(\frac{\Sigma_t}{\Delta_t}\right)$$

Avec,

$$\Sigma_t := \sum_{k=1}^{n} P_{S_k}^0(t)$$

$$\Delta_t := \sum_{k=1}^{n} \left[ P_{S_k}^{-1}(t) - P_{S_k}^{+1}(t) \right]$$

Où, $P_0^i$

, est le point de passage de référence d'indice i

n, est le nombre de sources d'émission visibles du point de passage de référence

$S_k$, est le signal reçu d'indice k

$P_{S_k}^0(t)$ , est la puissance du signal reçu dans la voie centrale

$P_{S_k}^{-1}(t)$

, est la puissance du signal reçu dans la voie adjacente gauche décalée d'une demi-ouverture du lobe de directivité de la voie d'antenne $P_{S_k}^{+1}(t)$

, est la puissance du signal reçu dans la voie adjacente droite décalée d'une demi-ouverture du lobe de directivité de la voie d'antenne

*Cette* formulation peut être généralisée (m) voies adjacentes en réalisant un cumul des écarts des puissances de sortie des voies symétriques à gauche $P_{S_k}^-(t)$ et à droite $P_{S_k}^+(t)$ , avec

$$P_{S_k}^-(t) = \sum_{l=1}^{m} P_{S_k}^{-l}(t)$$

$$P_{S_k}^+(t) = \sum_{l=1}^{m} P_{S_k}^{+l}(t)$$

Ladite méthode des voies adjacentes sert aussi à une estimation plus précise de la date de passage ( $t_p(P_0^i)$ ) au point de référence $P_0^i$ sans devoir réaliser le calcul de ce critère de détection à un rythme rapide (pour être compatible de la précision temporelle que l'on souhaite atteindre sur l'estimation de cette date). En effet, le rapport inverse $\left( \frac{\Delta_t^k}{\Sigma_t^k} \right)$ obtenu lorsque le critère de détection passe par sa valeur maximale, est aussi représentatif, au premier ordre, de l'écart angulaire résiduel $\partial\theta_k$ existant à cet instant entre l'angle instantané et l'angle attendu, pour chacune des sources d'émission k :

$$\frac{\Delta_t^k}{\Sigma_t^k} = \frac{1}{2}\left(\frac{\delta D_k\left(-\frac{\theta_3}{2}\right)}{\delta\theta} - \frac{\delta D_k\left(\frac{\theta_3}{2}\right)}{\delta\theta}\right) \cdot \partial\theta_k$$

où, $D_k(\theta)$ est la fonction de directivité spatiale connue de la voie d'antenne k

Cet écart permet de déduire l'écart de temps résiduel $\partial$t sur la date exacte de passage sur la direction réelle d'émission, sur la base d'une estimation de la vitesse de défilement angulaire relative vue entre chacune des sources d'émission et le mobile de réception au temps courant, établie à partir de la vitesse du mobile, estimée par ailleurs, de la vitesse de variation de cap de la trajectoire qui en découle au point de référence et des vitesses de défilement angulaire des sources d'émission au même instant, dont une valeur moyennée

$$\overline{\partial\theta} = \frac{1}{n}\sum_{k=1}^n \partial\theta_k$$

sur l'ensemble des sources d'émission est calculable à partir de l'expression instantanée de l'angle d'arrivée :

$$\theta_k := \arcsin(|\vec{k}\wedge\vec{u}|) = arcsin(|\vec{w}_k|)$$

Où,

$\vec{k}$ est le vecteur unitaire de la direction d'arrivée du signal k au point de passage $P_0^i$

$\vec{u}$ est le vecteur vitesse du mobile au point de passage $P_0^i$

$\vec{w}$ est le produit vectoriel $\vec{k}\wedge\vec{u}$

$$\left[\frac{\delta\theta_k}{\delta t}\right]_{(t_p(P_0^i))} = \left[\frac{\delta\left(\arcsin(|\vec{w}_k|)\right)}{\delta t}\right]_{(t_p(P_0^i))} = \left[\frac{1}{\sqrt{1-|\vec{w}_k|^2}}\right]_{(t_p(P_0^i))} \cdot \left[\frac{\delta|\vec{w}_k|}{\delta t}\right]_{(t_p(P_0^i))}$$

Les calculs analytiques de $|\vec{w}_k|$ et de $\dfrac{\delta|\vec{w}_k|}{\delta t}$ peuvent alors être facilement menés connaissant, à l'instant de passage $t_p(P_0^i)$, la position de chacun des émetteurs, la vitesse du mobile et la courbure de la trajectoire, la position du point de référence $P_0^i$,

D'où,

$$\partial t_{k(t_p(P_0^i))} = \left[\frac{\delta\theta_k}{\left[\frac{1}{\sqrt{1-|\vec{w}_k|^2}}\right]\cdot\left[\frac{\delta|\vec{w}_k|}{\delta t}\right]}\right]_{(t_p(P_0^i))}$$

Dont on dérive la valeur moyenne estimée de l'écart de temps résiduel :

$$\overline{\partial t}_{k(t_p(P_0^i))} = \left[\frac{1}{n}\sum_{k=1}^n \partial t_k\right]_{(t_p(P_0^i))}$$

Ainsi, il est possible de réaliser la détection à un rythme de l'ordre de 100 ms à 1s tout en atteignant une précision après interpolation de l'ordre de 10ms, soit encore une précision le recalage de la position de l'ordre de 0,1 m à 1m pour un mobile se déplaçant à 100m/s.

La méthode de détection par combinaison de plusieurs voies de directivités adjacentes permet également de calculer un rayon de protection sur la datation du passage, dans une mise en oeuvre de monitoring possible dite du « maximum au centre », appliquée sur au moins 3 des voies précédentes, et pour une confiance donnée par la Pnd, Pfa et le rapport signal à bruit minimum de réception.

Dans une configuration particulière de la méthode, le filtrage adapté spatial appliqué pour réaliser la détection de passage embarquée peut être mise en oeuvre via un traitement d'Antenne à Synthèse d'ouverture Passif (PSAA) en réception de signaux cohérents temporellement et spatialement. Ce type de traitement permet de réduire la complexité de l'antenne et de son traitement, et tire profit de la connaissance de la trajectoire de déplacement de la plateforme et des sources d'émission afin de réaliser un filtrage cohérent adapté à la direction de réception des signaux, par exemple GNSS, mais pas exclusivement, à proximité des balises.

La méthode proposée par cette invention permet en outre, dans une configuration où le filtrage adapté est réalisé conjointement sur les angles, le temps et la fréquence des signaux reçus, de réduire le niveau des trajets multiples et des interférences, et ainsi d'améliorer la robustesse de l'estimation des instants d'arrivée (phase de code) et des doppler (phase de porteuse).

**Ainsi, l'invention a pour objet :**

Un procédé de détection de passage embarquée ne nécessitant pas une synchronisation temporelle préalable précise entre émetteurs et récepteur, d'un mobile se déplaçant sur une trajectoire contrainte en un ou plusieurs points particuliers de cette trajectoire (dit points de passage de référence ), le dit procédé permettant de réaliser un filtrage adapté spatial sur les dites directions attendues d'émetteurs de référence à ces points de passages, basé sur la détection des directions d'arrivée en gisement et élévation de ces signaux

Suivant des modes particuliers de réalisation, le procédé de détection de passage embarquée d'un mobile comprend l'une ou plusieurs des caractéristiques suivantes, prises isolément ou en combinaison :

- Détection de passage embarquée par recherche de coïncidence des directions reçues et des directions prédites en gisement des sources d'émission de référence aux points de passage, caractérisée en ce que les directions d'incidence des signaux de référence soient extraites par traitement spatial d'antenne et comparées, pour minimisation, avec les directions attendues des sources d'émission au point de passage de référence selon une métrique d'écart angulaire.
- Détection de passage embarquée par filtrage adapté spatial des directions attendues des sources d'émission de référence aux points de passage, caractérisée en ce que la détection de coïncidence en gisement des directions d'arrivée des signaux attendus au point de passage de référence est mise en oeuvre par une formation de voies de directivité qui réalise un filtrage adapté spatial prépositionné dans lesdites directions d'arrivées des sources d'émission pour maximisation de la puissance multi-sources reçue.
- Détection de passage embarquée, caractérisée en ce que le traitement de formation de voies de directivité est réalisé par intégration cohérente des signaux reçus, après compensation de la phase du signal reçu, correspondant à la projection du déplacement du mobile dans la direction d'émission de chaque signal de référence, supposé à phase cohérente, le tout formant ainsi un traitement de filtrage spatial dit antenne à synthèse d'ouverture.
- Détection de passage embarquée, caractérisée en ce qu'il comporte une étape de calcul des directions des signaux de référence, transmis par des sources d'émission fixes ou mobiles, estimées au temps courant en fonction de la position du point de passage de référence choisi et des positions des sources d'émission des signaux de référence dont les trajectoires sont supposées connues dans le même référentiel spatio-temporel.
- Estimation fine de la date de passage par filtrage adapté spatial selon l'invention, caractérisée en ce que plusieurs voies de directivité adjacentes en gisement réalisent un encadrement autour de la direction de chacun des signaux de référence au point de passage pour créer en parallèle au moins 3 voies de directivités équidistantes en gisement se recoupant spatialement à -3dB.

Une mise en oeuvre des signaux selon l'invention consiste à maximiser un critère de détection du type, Sigma-Delta ($\Sigma/\Delta$), permettant de déterminer le moment du passage au point de référence pour lequel la voie centrale, quand elle est parfaitement adaptée au gisement de la direction attendue pour chacun des signaux émis, est de puissance maximale et les voies latérales sont symétriquement de même puissance.

- Détection de passage embarquée d'un mobile caractérisée en ce que le filtrage adapté spatial en gisement des directions des signaux de référence est complété par un filtrage adapté temporel et un filtrage adapté fréquentiel des retards et dopplers attendus des signaux reçus au point de passage de référence

L'invention a également pour objet des modes de mise en oeuvre particuliers du procédé de détection de passage embarquée :

i) Caractérisés en ce que la date de passage au point de référence soit prédite dans un encadrement déterminé par les incertitudes liées au modèle de dynamique du mobile sur la trajectoire et à l'erreur de synchronisation de la base de temps locale, ledit encadrement devant être compatible de l'imprécision induite sur les directions d'incidences attendues des signaux de référence au point de passage (typiquement de l'ordre de quelques secondes, dans le cas de signaux GNSS).
ii) Pour lesquels la direction déplacement du mobile au point de référence considéré est déterminée par une carte géoréférencée de la trajectoire.
iii) Pour lesquels la vitesse du mobile est connue en temps réel et fournie par un dispositif d'estimation dédié.

Suivant d'autres modes particuliers de réalisation, le procédé de détection de passage embarquée est mis en oeuvre avec les caractéristiques suivantes :

i) Les signaux de référence utilisés sont les signaux de constellations GNSS.
ii) Le mobile est un train se déplaçant sur un ensemble de voies ferroviaires géoréférencées.

L'invention a également pour objet un dispositif composé d'un récepteur des signaux, un calculateur et des programmes informatique, implantant les procédés de détection de passage embarquée par filtrage adapté selon l'invention, caractérisé en ce qu'il comprend :

i) Une antenne.
ii) Un récepteur de géopositionnement adapté à l'acquisition et à la poursuite des signaux de référence en temps et en fréquence.
iii) Une référence de temps, mesurant le temps courant, synchronisée sur le temps système d'émission des signaux par l'intermédiaire du récepteur de géopositionnement.
iv) Une cartographie géoréférencée de la trajectoire et des points de référence.
v) Des moyens de calcul pour réaliser le traitement d'antenne et la détection de passage embarquée par détection d'un maximum de puissance de la fonction de corrélation au moment du passage du mobile en ce point,

Par calculateur électronique, on entend ici un système comportant un ou plusieurs microprocesseurs, ordinateurs ou tout autre moyen équivalent, pouvant être programmés de façon appropriée pour implémenter les différentes opérations de calcul mises en oeuvre dans le cadre du procédé selon l'invention.

Un autre objet de la présente invention est un programme informatique comprenant des instructions lisibles par un ordinateur ou tout type de dispositif informatique équivalent qui, lorsqu'elles sont exécutées sur un processeur, amènent le processeur à exécuter le procédé de détection de passage embarquée ponctuel en des points de références de la trajectoire géoréférencés.

## Brève description des figures

L'invention sera mieux comprise à la lecture de la description de plusieurs formes de réalisation qui va suivre, donnée uniquement à titre d'exemple et faite en se référant aux dessins sur lesquels :

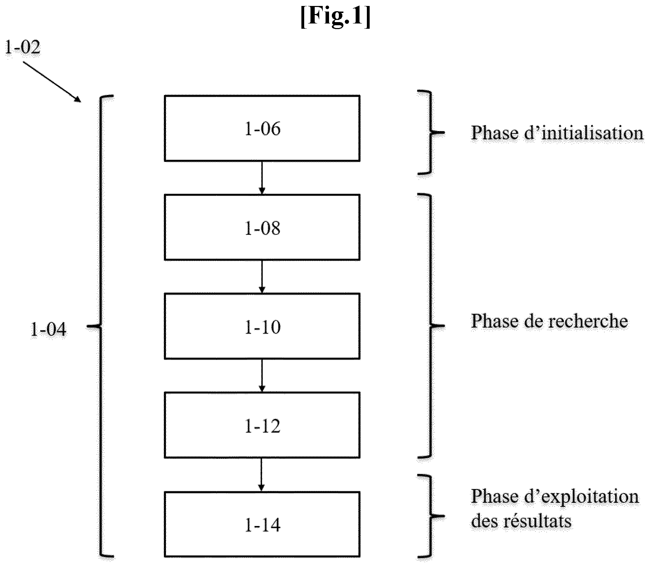

[Fig.1] présente le mode de réalisation le plus général du procédé de détection de passage embarquée par coïncidence d'angles.

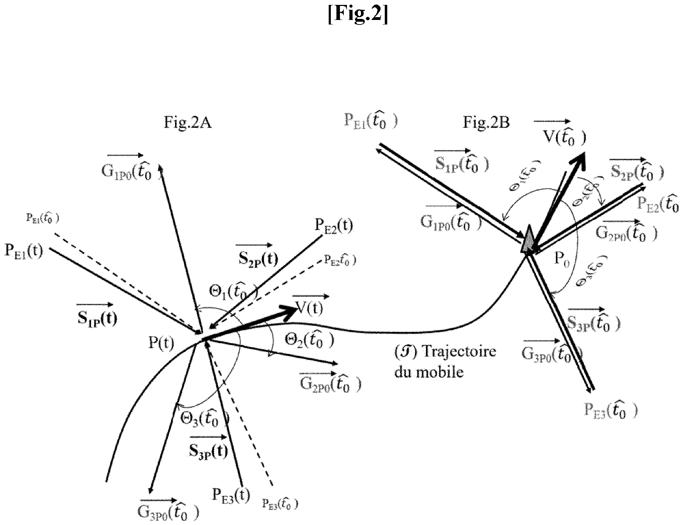

[Fig.2] illustre le principe de détection de passage embarquée, sans synchronisation préalable précise temporelle et fréquentielle entre émetteurs et récepteur, réalisé par recherche de coïncidence entre les angles des directions d'arrivée des signaux reçus d'un mobile et les directions prédites de ces mêmes signaux aux points de passage de référence sur la trajectoire, dans une première mise en oeuvre dans laquelle il est possible de disposer avec une confiance et dans un délai d'alerte suffisant d'une estimation a priori, à quelques secondes près, de la date de passage,

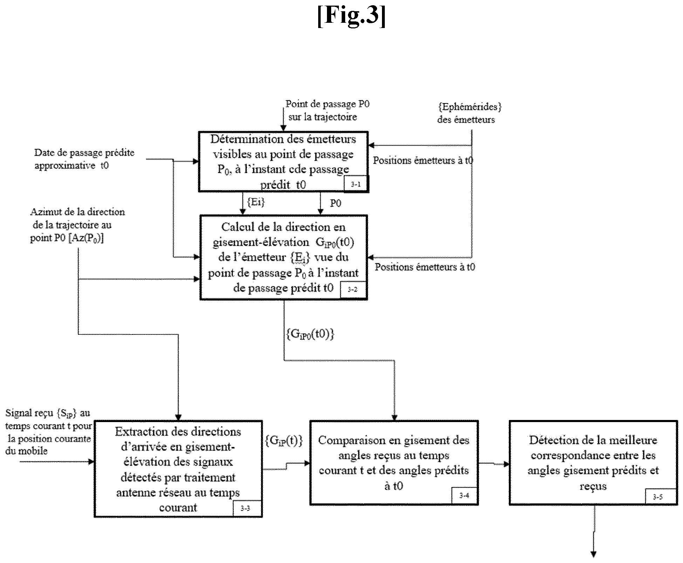

[Fig.3] décrit un premier mode de réalisation conformément au principe illustré en figure 2, la date de passage $t_0$ au point de référence attendu $P_0$ pouvant être prédite de façon approximative, mettant en oeuvre une estimation des angles d'arrivée en gisement des signaux de référence à partir d'une antenne multi-senseurs, et leur comparaison par rapport aux angles attendus au point de passage, par mesure d'écart quadratique moyen des angles

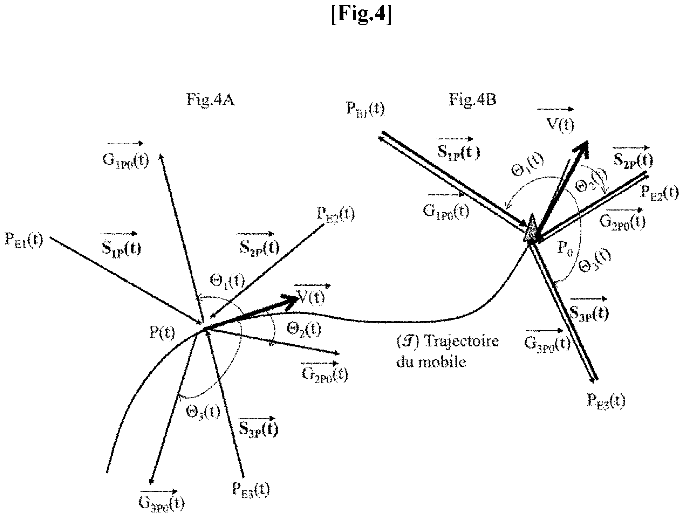

[Fig.4] illustre de façon alternative le principe de la détection de passage embarquée par coïncidence d'angles d'arrivée des directions des signaux reçus et prédits, dans une seconde mise en oeuvre dans laquelle il n'est pas possible de disposer d'une estimation a priori d'un encadrement de la date de passage, consistant à approximer les directions attendues au point de passage de référence $P_0$ non plus à un instant de passage prédit $\widehat{t_0}$, mais par les directions estimées au temps courant.

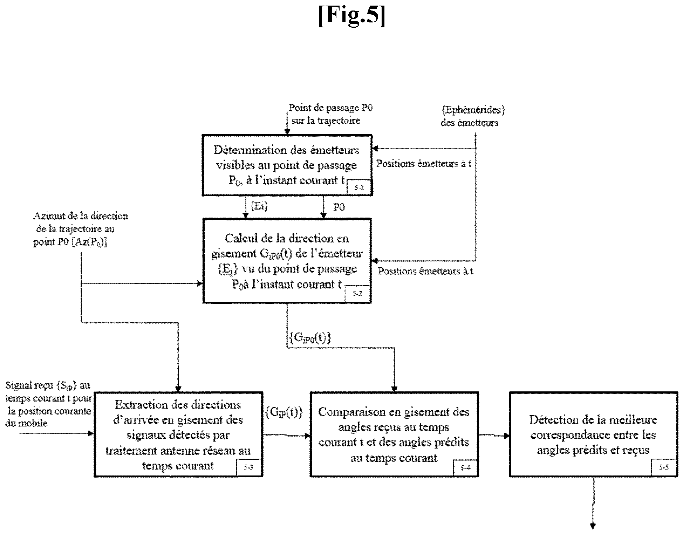

[Fig.5] décrit un second mode de réalisation conformément au principe décrit en figure 4, pour lequel la date de passage $t_0$ au point de référence attendu P0 ne peut être prédite, et choisie égale au temps courant.

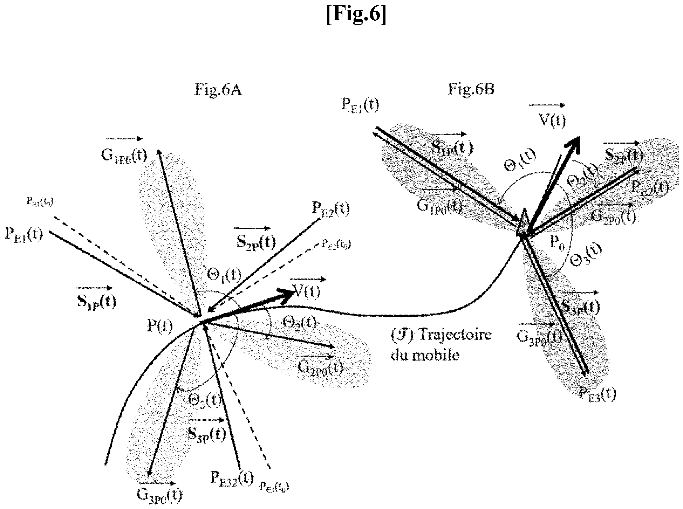

[Fig.6] illustre un troisième principe de détection de passage embarquée, dans lequel la date de passage est soit prédite approximativement soit indéterminée, la détection de la coïncidence entre les directions en gisement attendues et effectives des signaux reçus au point de passage étant réalisée par filtrage adapté spatial, mis en oeuvre par formation de voies en gisement via une antenne multi-senseurs non ambiguë.

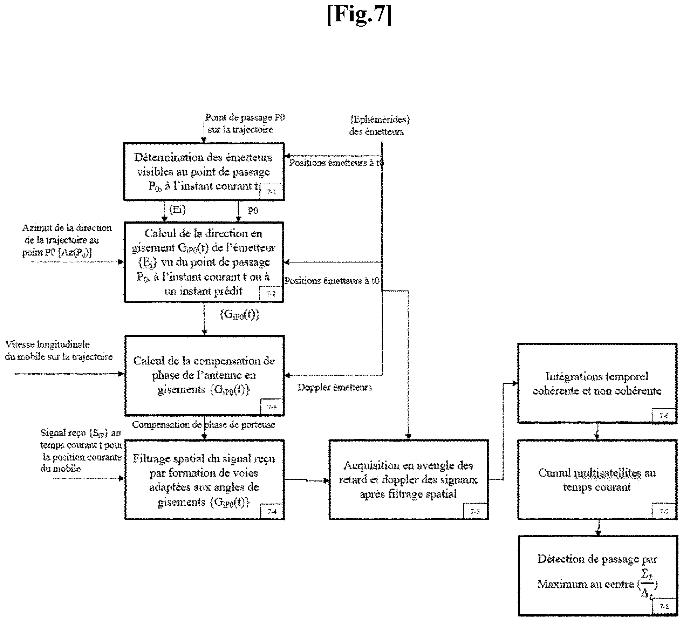

[Fig.7] décrit un troisième mode de réalisation conformément au principe illustré en figure 6, pour lequel la date de passage est soit définie approximativement soit indéterminée, mettant en oeuvre un filtrage adapté spatial en gisement des signaux de référence réalisé par une antenne multi-senseurs, et la détection du maximum de puissance reçue au point de passage attendu.

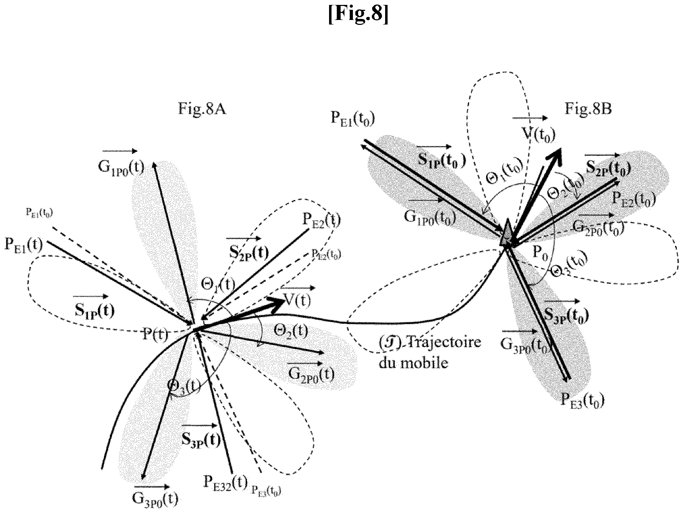

[Fig.8] illustre un quatrième principe de détection de passage embarquée par filtrage adapté spatial mis en oeuvre par formation de voies en gisement via un traitement mono-antenne à synthèse d'ouverture, avec ou sans prédiction de la date de passage

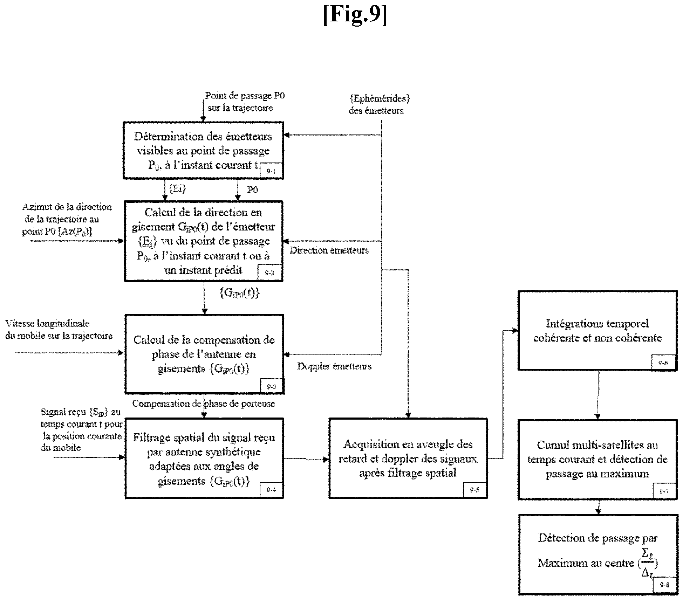

[Fig.9] décrit un quatrième mode de réalisation conformément au principe illustré en figure 8, pour lequel la date de passage est soit définie approximativement soit indéterminée, mettant en oeuvre un filtrage adapté spatial en gisement des signaux de référence réalisé par traitement d'antenne à synthèse d'ouverture

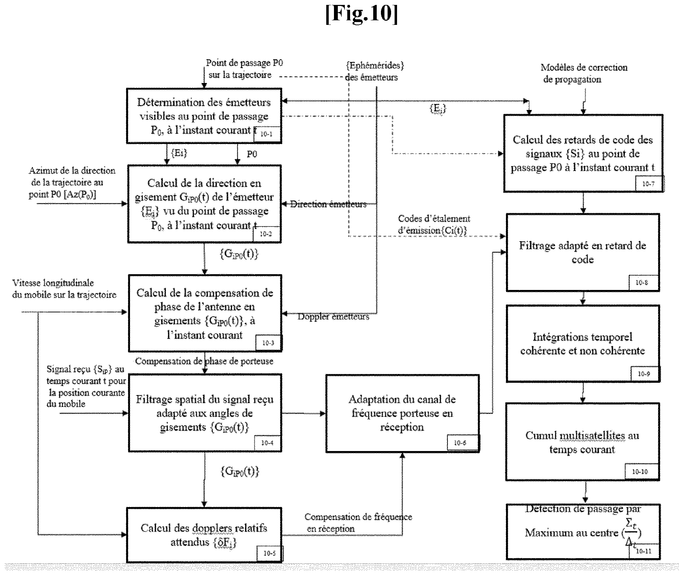

[Fig.10] décrit un principe supplémentaire et un mode de réalisation de détection de passage embarquée d'un mobile en un point de référence particulière d'une trajectoire contrainte, mettant en oeuvre à la fois le filtrage adapté spatial sur les directions d'arrivée des signaux de références et le filtrage adapté sur les retards et fréquences attendus des signaux de référence.

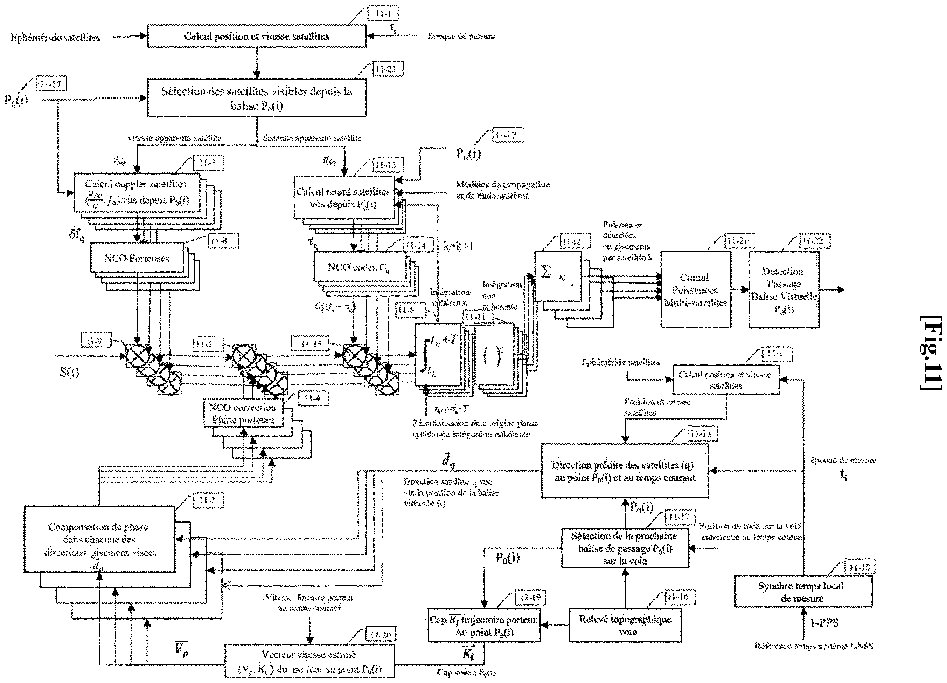

[Fig.11] décrit, un mode de réalisation du procédé, préféré mais non limitatif, mettant en oeuvre les signaux GNSS, en appliquant le principe de la formation de voies d'antenne à synthèse d'ouverture, et adapté pour la détection de passage embarquée par filtrage adapté conjoint des domaines spatial, temporel et fréquentiel en des points de référence (balises virtuelles) répartis sur la voie ferrée.

## Description détaillée

Selon le principe général de la méthode proposée, la détermination de la date de passage du mobile à une position de référence sur l'axe curviligne de sa trajectoire est effectuée par détection de la date offrant la meilleure correspondance entre les angles de gisement des signaux de référence prédits pour le point de passage de référence et les angles en gisement reçus pour les mêmes signaux de référence par un récepteur installé sur le mobile.

[Fig.1] présente le mode de réalisation le plus général du procédé de détection de passage embarquée par coïncidence d'angles. Le procédé selon l'invention comprend un ensemble (1-2) d'étapes, configurées pour mettre en oeuvre une stratégie de détection de la date de passage à la position de référence la plus proche de la trajectoire du mobile, c'est-à-dire encore identifier l'instant correspondant au passage par rapport au point de référence le plus proche de l'emplacement du récepteur embarqué à bord du mobile, en exploitant les signaux de référence reçus et la connaissance a priori des positions $P_0(i)$ des points de passage de référence fixés et prédéterminés fourni par la base des données topographiques

L'ensemble (1-4) des étapes du procédé général de détection de passage embarquée par coïncidence d'angles comprend une phase d'initialisation dans une première étape (1-6), une phase de mise en coïncidence des angles d'arrivée des signaux avec les directions attendues des signaux au point de passage de référence dans des deuxième, troisième, quatrième étapes (1-8), (1-10), (1-12), et une phase d'exploitation des résultats de la recherche incluant une cinquième étape (1-14).

Dans la première étape (1-6) d'initialisation générique à tous les modes de réalisation, un premier ensemble de positions des points de passage de référence $P_0(i)$ sur la trajectoire du mobile est déterminé à partir de la base de données topographique. On suppose que tous les points de référence sont situés sur la trajectoire du mobile et seront franchis au fil du déplacement du mobile.

Dans la même étape d'initialisation (1-6), dans une phase parallèle, un second ensemble de données a priori correspondant aux directions en azimut de déplacement du mobile sur sa trajectoire aux différents points de passage est déterminé à partir de la base de données topographique.

Dans la première étape (1-6) d'initialisation, les dates de passage $t_0(i)$ du mobile, supposées prédictibles avec une précision inférieure à quelques seconde (10s étant un maximum), sont prédits formant un troisième ensemble d'hypothèses.

Toujours dans la première étape (1-6) d'initialisation, un quatrième ensemble de données correspondant aux positions des sources d'émission des signaux aux différentes dates de passage prédites est calculé pour chaque source d'émission supposée en déplacement.

Encore dans la même étape d'initialisation (1-6), dans une phase consécutive, un cinquième ensemble de sources d'émission visibles depuis chaque point de passage est déterminée à parti de la position du point de passage et de la position des sources d'émission pour les dates de passages approximatives prédites pour chaque point de passage.

La seconde étape (1-8) comporte de façon générique le calcul de la direction en gisement-élévation $G_{iP0}(t_0)$ de chacun des émetteurs {Ei} visible depuis chaque point de passage $P_0(j)$ à l'instant de passage prédit $t_0(j)$, établi à partir des positions connues des sources d'émission visible à chaque instant de passage, et des directions en azimut du déplacement du mobile sur sa trajectoire contrainte, aux instants de passage aux points de référence sur la trajectoire.

La troisième étape (1-10) correspond aux différentes stratégies possibles de mise en coïncidence spatiale entre les directions d'arrivée des signaux de référence et des signaux prédits, selon les différents modes de réalisation décrits ultérieurement par la présente invention.

Ensuite, dans la quatrième étape (1-12), le calculateur détermine pour chaque point de passage de référence sur la trajectoire la date de passage pour laquelle la coïncidence angulaire est maximale et fournit cette position de référence et ce temps de passage en données de sortie comme étant la date de passage la plus probable relative au passage du mobile pour cette position de référence.

Les figures suivantes décrivent en détail les différents modes de réalisation de la recherche de coïncidence selon l'invention, ainsi que la méthode de détection de la coïncidence maximale.

Dans une cinquième étape (1-14), optionnelle, consécutive à la quatrième étape (1-12), le calculateur électronique réalise une consolidation de l'intégrité de la date de passage en complétant le traitement de filtrage adapté spatial par un filtrage adapté sur les retards et fréquences .

[Fig.2] illustre un premier principe de détection de passage embarquée, sans synchronisation préalable précise temporelle et fréquentielle entre émetteurs et récepteur, réalisé par recherche de coïncidence des angles d'arrivée des directions mesurées des signaux reçus d'un mobile se déplaçant à la vitesse V(t) en un point de passage de référence P(t) d'une trajectoire contrainte (T), avec les directions prédites des mêmes signaux aux instants de passages aux points de référence $P_0i$ de la trajectoire, dans une première mise en oeuvre dans laquelle il est possible de disposer avec une confiance et un délai d'alerte suffisants d'une estimation a priori d'un encadrement de la date de passage, mais cela seulement à quelques secondes près (comme ordre de grandeur pour une mise en oeuvre de signaux GNSS), par exemple dans le cas d'un mobile en déplacement de croisière en vitesse établie et signaux d'émission lointains transmis par satellites.

Elle représente les angles d'arrivée des signaux et des angles d'arrivée attendus pour 2 positions du mobile sur la trajectoire :

i) [Fig.2A], à une position P(t) quelconque du mobile sur la trajectoire, à un instant t différent de l'instant de passage à la position attendue $P_0$, illustrant la non coïncidence entre les angles d'arrivée des signaux et les directions attendues en gisement à cet instant quelconque

ii) [Fig.2B], au point de passage de référence $P_0$ attendu, pour un instant de passage $\hat{t}_0$ prédit, illustrant l'adaptation des angles d'incidence des signaux et les directions attendues en gisement à l'instant de passage

La coïncidence est estimée par la mesure des écarts entre les vecteurs d'onde des signaux reçus $S_{iP}(t)$ à l'instant courant (t) pour la position courante du mobile, avec la direction d'arrivée en gisement $G_{iP}(t)$ de ces mêmes signaux pour le point de passage $P_0$ de référence, pour une date de passage prédite $\hat{t}_0$ dans un encadrement de quelques secondes, où,

$P_{Ei}(t)$ est la position (connue) de l'émetteur Ei à un instant quelconque t

$P_{Ei}(\hat{t}_0)$ est la position de l'émetteur Ei à l'instant $\hat{t}_0$, correspondant à l'instant de passage prédit du mobile au point P0

$S_{iP}(t)$ est le signal reçu de l'émetteur Ei en un point quelconque P(t) de la trajectoire T à un instant quelconque t

$S_{iP}(\hat{t}_0)$ est le signal reçu de l'émetteur Ei à l'instant de passage prédit du mobile au point de passage P0

$G_{iP0}(t)$ est la direction en gisement de l'émetteur $E_i$ vue du point de passage $P_0$, à un instant quelconque t

$G_{iP0}(t0)$ est la direction en gisement de l'émetteur $E_i$ vue du point de passage $P_0$, à l'instant de passage prédit $\hat{t}_0$ $(G_{iP0}(t) \# G_{iP0}(\hat{t}_0))$, en supposant que l'angle apparent des sources d'émission de référence (par exemple dans le cas de satellites) évolue peu pendant le rapprochement du mobile à proximité du point de référence de

passage

$Q_i(t)$ est l'angle en gisement de la direction de l'émetteur Ei vue du point de passage P0, à un instant quelconque t

$\Theta_{i0}(t)$ est l'angle en gisement de la direction de l'émetteur Ei vue du point de passage P0, à l'instant de passage prédit du mobile au point de passage $P_0$

V(t) est la vitesse longitudinale du mobile sur la trajectoire à un instant quelconque t

$V(\widehat{t_0})$ est la vitesse longitudinale du mobile sur la trajectoire au point P0 à l'instant de passage prédit $\widehat{t_0}$

Les trajectoires des sources d'émission, fixes ou mobiles, étant connues, et disposant d'une prédiction approximative $\widehat{t_0}$ de la date de passage il est possible de calculer une estimation de leurs directions en azimut et élévation dans un repère relatif pour les points de passage de référence sur la trajectoire. Dans une mise en oeuvre où les sources d'émission satellitaires sont lointaines et mobiles (par exemple situées à environ 20000km, dans le cas de satellites MEO), les angles apparents des directions des sources évoluent peu pendant la durée de rapprochement du mobile au point de passage de référence, et l'imprécision sur la direction prédite peut être négligée.

Les angles apparents de sources d'émission lointaines évoluant lentement, il n'est pas nécessaire de réaliser une synchronisation préalable précise en temps et en fréquence entre émetteurs et récepteur pour maintenir une estimation continue des angles d'incidence des signaux de référence à proximité du point de passage attendu (à quelques km près).

La date de passage prédite étant unique, et dans le cadre d'une configuration univoque des positions des émetteurs (comme peut l'être à moyen terme la configuration spatiale des satellites GNSS par exemple), la combinaison d'angles d'arrivée ainsi prédite est réalisée elle aussi de façon unique pour le seul instant de passage prédit.

Il est alors possible, à partir des angles « azimut-élévation », de prédire les angles « gisement-élévation » des sources de référence, le gisement correspondant à l'angle de la source par rapport à la direction de déplacement du mobile au point de passage attendu, projeté dans le plan horizontal.

Lorsque la direction de déplacement du mobile sur sa trajectoire est rapidement variable et lorsque les sources d'émission sont elles aussi en déplacement, il est possible de déterminer un instant de passage unique par détection de la coïncidence entre les directions attendues en gisement-élévation et les angles de réception effectifs des signaux.

[Fig.3] décrit un premier mode de réalisation conformément au principe illustré en figure 2, pour lequel la date de passage t0 au point de référence attendu P0 est prédite de façon approximative, basé sur l'estimation des angles d'arrivée en gisement des signaux de référence à partir d'une antenne multi-senseurs, et leur comparaison par rapport aux angles attendus au point de passage, par mesure d'écart quadratique moyen.

Ayant préalablement établi via une base de données topographique de la trajectoire, les positions des points de passage de référence, les dates prévisionnelles de passage aux points de référence, la position des émetteurs aux dates de passages prévisionnelles, ce mode de réalisation comprend les étapes suivantes :

- l'étape (3-1) réalise la sélection des émetteurs visibles pour chacun des points de référence aux dates de passage prévisionnelles. Le calcul retient les sources dont l'angle en élévation dans le repère local est supérieur à une valeur minimale, éventuellement défini par un masque de visibilité en azimut-élévation établi en chaque point de la trajectoire considérée
- L'étape (3-2) réalise le calcul de la direction de chaque source et en chaque point de passage de référence, par conversion de la direction azimut-élévation calculée des sources sélectionnées en étape (3-1), en direction gisement-élévation après soustraction de la direction de déplacement du mobile en azimut, obtenue à chaque point de passage de référence, à partir du relevé topographique de la trajectoire
- L'étape (3-3) réalise l'estimation des directions d'arrivée des signaux reçus au temps courant en gisement-élévation.

L'estimation des angles d'arrivée est basée sur une mesure de la distribution spatiale en azimut-élévation du champ électromagnétique des signaux reçus suivie d'une extraction et d'une poursuite, si le rapport signal à bruit permet d'atteindre une précision de mesure angulaire suffisante (au degré près, à titre indicatif). La mesure de la distribution spatiale du champ électromagnétique peut être réalisée classiquement par simple remise en cohérence des ondes reçues sur une antenne réseau multi-senseurs, par formation de voies multiples menées en parallèle, permettant de couvrir l'ensemble du domaine spatial de réception.

Elle peut aussi être réalisée sur une méthode à haute résolution du type MUSIC, voire une méthode de traitement spatial adaptative (de type Capon) en vue de réduire l'impact d'éventuelles source de brouillage.

L'étape (3-4) réalise un calcul de distance angulaire quadratique moyen entre les angles en gisement reçus au temps courant et ceux prédits pour les satellites visibles au prochain point de passage, selon l'expression :

$$D_\theta^2(t, P_0(i)) := \frac{\sum_{k=1}^{n_s} SNR_k \cdot \left(\theta_k^m - \theta_k^{P0(i)}\right)^2}{\sum_{k=1}^{n_s} SNR_k}$$

où,

$\theta_k^m$ est l'angle d'arrivée en gisement de l'émetteur k mesuré au temps courant

$\theta_k^{P0(i)}$ est l'angle d'arrivée en gisement de l'émetteur k prédit au point de passage $P_0$(i)

$SNR_k$ est le rapport signal à bruit du signal reçu k dans la bande de calcul de la fonction de corrélation

L'étape (3-5) réalise la détection de la date de passage $t_o^i(t)$ correspondant au minimum de la distance angulaire quadratique moyenne selon le déplacement du mobile sur la trajectoire

$$\widehat{t_o^i(t)} := Min_t(D_\theta^2(t, P_0(i)))$$

Cette première réalisation basée sur la mesure des angles d'arrivée permet une mise en oeuvre directe des principes de coïncidence d'angles décrits en Fig.2 et Fig.4, mais ne permet pas de bénéficier du traitement spatial pour améliorer les rapports signal à bruit pour des étapes ultérieures qui permettraient de réaliser des filtrages adaptés supplémentaires des signaux sur les retards et dopplers attendus au point de passage.

On lui préférera les procédés qui permettent de réaliser un filtrage adapté spatial des signaux reçus dans les directions attendues des sources, délivrant un premier ensemble de signaux temporels filtrés spatialement, tel que décrit dans les figures 10 et 11 des paragraphes suivants.

[Fig.4] illustre de façon alternative le principe de la détection de passage embarquée par coïncidence d'angles d'arrivée des directions des signaux reçus d'un mobile se déplaçant à la vitesse V(t) en un point de passage de référence P0 d'une trajectoire contrainte (T), dans une seconde mise en oeuvre dans laquelle il n'est pas possible de disposer d'une estimation a priori d'un encadrement de la date de passage présentant suffisamment de confiance (par exemple, dans le cas de mobiles susceptibles de s'arrêter pendant la phase de rapprochement de la position de passage de référence).

Elle représente les angles d'arrivée des signaux et des angles d'arrivée attendus pour 2 positions du mobile sur la trajectoire :

- [Fig.4A] à une position P(t) quelconque du mobile sur la trajectoire, à un instant t différent de l'instant de passage à la position attendue P0, illustrant la non-coïncidence entre les angles d'arrivée des signaux et les directions attendues en gisement à cet instant quelconque
- [Fig.4B] au point de passage de référence P0 attendu, , illustrant l'adaptation des angles d'incidence des signaux et les directions attendues en gisement à cet de passage.

L'instant de passage au point de référence de la trajectoire n'étant pas connu avec une garantie de précision (encadrement de l'erreur) suffisante, il n'est plus possible de prédire avec suffisamment de précision les directions en gisement attendues du point $P_0$ pour un instant prédit.

La méthode alternative selon l'invention consiste alors à approximer les directions attendues au point de passage de référence $P_0$ non plus à un instant de passage prédit $\widehat{t_0}$, mais par les directions estimées au temps courant. Les angles apparents de sources lointaines évoluant lentement, il n'est pas nécessaire de réaliser une synchronisation préalable précise en temps et en fréquence entre émetteurs et récepteur,

Pour cela on calcule la différence à l'instant courant entre,

i) les angles d'arrivée des signaux reçus par le mobile par rapport à sa direction de déplacement à cet instant et
ii) les angles d'arrivée des signaux au point de passage de référence par rapport à la direction de la trajectoire en ce point au même instant

qui estime la différence au temps courant entre la direction de la trajectoire du mobile et la direction de la trajectoire au point de passage de référence.

Par contre, une parfaite coïncidence entre les directions attendues en gisement au point P0 et les directions d'arrivées des signaux est réalisée lorsque le mobile atteint le point de passage $P_0$.

Il est à noter que dans le cas d'émetteurs lointains (tels que des satellites GNSS), la méthode de détection de passage embarquée devient ambiguë en direction et ne permet pas de distinguer des positions qui correspondent à la même direction de déplacement sur la trajectoire.

Il est possible cependant de déterminer sur la carte les zones de la trajectoire susceptibles de présenter des ambiguïtés de détection avec la position de passage de référence. Ces ambiguïtés peuvent être ensuite facilement levées par l'application de filtrage adaptés supplémentaires en retard et doppler, pour le point de passage attendu.

Par la suite, les exemples de réalisations des procédés décrits par l'invention pourront être compris aussi bien dans le cas d'une date de passage $\widehat{t_0}$ prédictible avec une confiance suffisante pour les besoins de l'application, soit dans le cas d'une date non prédictible, en ramenant la prédictions des angles au temps courant, sous l'hypothèse où les sources d'émission sont lointaines

[Fig.5] décrit un second mode de réalisation conformément au principe décrit en figure 4, pour lequel la date de passage $t_0$ au point de référence attendu P0 n'est pas prédite, mais choisie égale au temps courant.

Cette seconde réalisation est similaire dans sa mise en oeuvre à celle décrite figure 3, à l'exception de la date de calcul retenue pour déterminer la position des émetteurs qui est ici la date courante et non plus la date de passage prévisionnelle au point de passage de référence.

[Fig.6] illustre un troisième principe de détection de passage embarquée, ne nécessitant pas de synchronisation temporelle et fréquentielle préalable précise entre émetteurs et récepteur, réalisé par filtrage adapté spatial selon les angles en gisement du champ de réception des signaux reçus sur un mobile se déplaçant à la vitesse V(t) en un point de passage de référence P(t) d'une trajectoire contrainte (T), avec les directions prédites en gisement des mêmes signaux aux instants de passage du mobile aux points de référence $P_0$i de la trajectoire selon les directions de déplacement V($t_0$i).

Elle représente les angles d'arrivée des signaux et des angles d'arrivée attendus pour 2 positions du mobile sur la trajectoire :

i) [Fig.6A] à une position P(t) quelconque du mobile sur la trajectoire, à un instant t différent de l'instant de passage à la position attendue P0, illustrant la non-coïncidence entre les angles d'arrivée des signaux et les directions de pointage en gisement des voies d'antenne calculées pour la date courante

ii) [Fig.6B] au point de passage de référence P0 attendu, , illustrant l'adaptation des angles d'incidence des signaux et de pointage en gisement des voies d'antenne calculées pour la date courante.

L'objectif général selon l'invention consiste à détecter la date de passage d'un mobile via un filtrage adapté spatial en recherchant, au cours du déplacement du mobile sur sa trajectoire, le maximum d'une fonction de vraisemblance définie par la somme des fonctions de corrélations spatiales multi-sources obtenues en sortie d'un filtrage adapté en gisement sur chacun des signaux reçus.

Ce principe de détection peut être mis en oeuvre au moyen d'un traitement d'antenne réseau classique en prédisposant les directions des voies de réception de l'antenne dans des directions fixes en gisement et élévation correspondant aux directions attendues des signaux de référence au point de passage de référence.

Un avantage du point de vue des performances réside dans la capacité du traitement d'antenne à éliminer par filtrage spatial, notamment à proximité des points de passage de référence, les sources d'interférence susceptibles de perturber la réception des signaux, ainsi que les trajets multiples sur les signaux attendus.

Le paragraphe suivant fournit une formulation mathématique de l'estimateur de la date de passage selon ce principe.

Soit $d_k(\theta, \theta_k^{P0(i)})$ la fonction de directivité spatiale, réponse du filtrage spatial de l'antenne réseau, en fonction de l'angle en gisement θ et de l'angle de pointage de la voie en direction du gisement attendu du signal k au point de passage $P_0$(i)

La réponse de l'antenne à un signal incident de gisement $\theta_k$ à l'instant courant est:

$$R_k(\text{t}) = \int_{\theta=0}^{2\pi} S_k(\theta, \theta_k, t) \times d_k(\theta, \theta_k^{P0(i)}) \mathrm{d}\theta = S_k(\theta_k, t) \times d_k(\theta_k, \theta_k^{P0(i)})$$

$$R_T^2(\text{t}, P_0(\text{i})) := \sum_{k=1}^{n_s} (R_k^2(t)) = \sum_{k=1}^{n_s} \left( S_k(\theta_k, t) \times d_k(\theta_k, \theta_k^{P0(i)}) \right)^2$$

La détection de la date de passage $t_o^i(t)$ correspondant au maximum de la puissance quadratique de la somme des signaux reçus après filtrage adapté spatial, selon le déplacement du mobile sur la trajectoire

$$\widehat{t_o^i(t)} := Max_t(R_T^2(\text{t}, P_0(\text{i})))$$

[Fig.7] décrit un troisième mode de réalisation conformément au principe illustré en figure 6, pour lequel la date de passage est soit définie approximativement soit indéterminée, basé sur le filtrage adapté spatial en gisement des signaux de référence réalisé par une antenne multi-senseurs, et la détection du maximum de puissance reçue au point de passage attendu.

Ayant préalablement établi via une base de données topographique de la trajectoire, les positions des points de passage de référence, la position des émetteurs aux dates de passages prévisionnelles et éventuellement (mais sans obligation) les dates prévisionnelles de passage aux points de référence, alors :

- les étapes (7-1) et (7-2) sont similaires aux étapes (3-1) et (3-2) décrites pour la figure 3
- l'étape (7-3) réalise de façon classique le calcul de compensation de phase des signaux reçus sur les éléments de l'antenne réseau, sous l'hypothèse d'onde plane, pour chacune des voies k de directivité pointée en direction des gisements d'arrivée prédits $\theta_k^{P0(i)}$ des signaux aux points de passage de référence $P_0$(i) et en corrigeant les effets Doppler lié à la vitesse relative entre les émetteurs et le récepteur. Le calcul des coefficients de compensation de phase est déclenché dès le passage de la position de référence précédente effectué, et les coefficients sont maintenus inchangés tant que le nouveau point de passage n'est pas franchi.
- L'étape (7-4) réalise le filtrage adapté spatial entre les signaux reçus sur les éléments de l'antenne réseau (qui contient tous les signaux d'émission reçus de référence) et les voies de directivité (formées via les déphasages calculés en étape (7-3) pointés en gisement en direction des signaux attendus au point de passage.
- L'étape (7-5) est une étape facultative réalisant l'acquisition sur chaque sortie de voie de directivité des retards de propagation et des dopplers des signaux reçus, dans le cas de signaux cohérents et stationnaires synchronisables par des codes à large bande (tels les signaux GNSS)
- L'étape (7-6) réalise classiquement une intégration cohérente des signaux filtrés suivie ou non d'une intégration non cohérente après détection quadratique pour l'estimation de la puissance moyenne reçue en sortie de chacune des voies de directivité, ceci sur des durées compatibles de l'évolution doppler des signaux et de la vitesse de défilement angulaire des signaux dans le lobe de directivité des voies formées.
- L'étape (7-7) réalise le cumul des puissances reçues sur chaque voie de directivité
- L'étape (7-8) réalise la détection de passage embarquée par maximisation du critère ($\Sigma / \Delta$) des voies adjacentes, et le calcul la date de passage précise par la méthode des voies adjacentes.

[Fig.8] illustre un quatrième principe de détection de passage embarquée par filtrage adapté spatial obtenu par formation de voies de directivité d'antenne à synthèse d'ouverture, avec ou sans prédiction de la date approximative de passage.

Elle représente les angles d'arrivée des signaux et des angles d'arrivée attendus pour 2 positions du mobile sur la trajectoire :

i) [Fig.8A] à une position P(t) quelconque du mobile sur la trajectoire, à un instant t différent de l'instant de passage à la position attendue P0, illustrant la non-coïncidence entre les angles d'arrivée des signaux et les directions de pointage en gisement des voies d'antenne calculées pour la date courante

ii) [Fig.8B] au point de passage de référence P0 attendu, , illustrant l'adaptation des angles d'incidence des signaux et de pointage en gisement des voies d'antenne calculées pour la date courante.

Ce traitement d'antenne est mis en oeuvre via un traitement d'intégration cohérente selon le déplacement du mobile, dit « antenne à synthèse d'ouverture », appliqué à la réception de signaux à phase cohérente, tels que les signaux GNSS,

Le traitement d'antenne à synthèse d'ouverture, simple de mise en oeuvre, nécessite de disposer d'une bonne estimation de la vitesse du porteur pour le calcul précis des compensations de phases en direction des sources d'émission. Cette information peut être fournie par un récepteur GNSS associé, hybridé ou non à tout dispositif de mesure de vitesse bord, de type par exemple un odomètre ou une unité de référence inertielle.

Une limitation particulière de mise en oeuvre (par rapport à l'utilisation d'une antenne réseau) est liée à la symétrie de révolution de la directivité d'antenne en gisement autour de la direction de déplacement du porteur, susceptible de réduire l'efficacité du filtrage spatial en vue de la réjection de sources interférentes ou des trajets réfléchis.

Les voies de directivité sont formées en parallèle en direction de gisement fixes pour les différentes directions d'arrivées des signaux de référence (associés à chaque émetteur). La connaissance du plan de trajectoire au niveau de la position de référence attendue fournit le cap du déplacement en azimut pour ce point, et permet de déterminer la direction d'arrivée en gisement des signaux de référence par rapport à la direction de déplacement du mobile au niveau du point de passage de référence.

Ce traitement spatial, de la même façon qu'un traitement classique d'antenne réseau, augmente la robustesse de la détection de passage embarquée de par la capacité du traitement d'antenne à synthèse d'ouverture à filtrer spatialement les sources d'interférence (à phase cohérente) susceptibles de perturber la réception des signaux, ainsi que les trajets multiples sur les signaux attendus, ceci, spécifiquement à proximité des points de passage de référence.

La réalisation de ce traitement spatial consiste à compenser le mouvement du porteur projeté sur les directions attendues du signal satellite supposé parfaitement cohérent en phase, de façon à conserver une phase stationnaire pendant la durée de cette intégration.

L'effet antenne » est obtenu par combinaison des mesures de phase et d'amplitude du signal complexe obtenues après corrélation par le code local, prises au moment des mesures. Cette combinaison cohérente de mesures, réalisée après compensation de l'évolution de la phase correspondant au déplacement du mobile par rapport à l'axe d'incidence de la source émettrice, permet de reconstituer une « directivité spatiale » liée à l'antenne apparente, combinant ainsi en cohérence de phase le signal reçu (sous l'hypothèse où il présente une phase cohérente dans la direction « ciblée ») et en non-cohérence pour les autres sources d'interférences (puisqu'il n'y a pas de correspondance entre l'évolution de la phase de brouillage et celle de la compensation).

Le traitement d'antenne à synthèse d'ouverture est particulièrement bien adapté à la réception des signaux GNSS, dont l'émission, maîtrisée par des horloges ultra-stables, présente les propriétés nécessaires de cohérence de phase et de stationnarité, en temps et dans l'espace.

[Fig.9] décrit un quatrième mode de réalisation conformément au principe illustré en figure 8, pour lequel la date de passage est soit définie approximativement soit indéterminée, basé sur le filtrage adapté spatial en gisement des signaux de référence réalisé par une formation de voies d'antenne à synthèse d'ouverture, et la détection du maximum de puissance reçu au point de passage attendu.

Le traitement spatial pour la formation des voies directives est basé sur celui de l'antenne synthétique en réception, dont un principe de réalisation est décrit dans le brevet EP 2 410 352 A1 (« Dispositif d'antenne à synthèse d'ouverture de réception de signaux d'un système comprenant une porteuse et des moyens de détermination de sa trajectoire ») dans le cas des signaux GNSS, généralisée dans le cadre de la présente invention à tous types de signaux à phase cohérente, mais décliné au cas particulier de la détection de passage embarquée en un point de référence d'une trajectoire.

La particularité de la mise en oeuvre de l'antenne à synthèse d'ouverture dans ce mode de fonctionnement est que le traitement des voies de directivité en gisement est dédié à l'acquisition des signaux d'émission uniquement à proximité du point de passage de référence, les voies étant formées en gisement spécifiquement dans les directions des sources d'émission vues par rapport au point de passage de référence et n'étant donc pas, la plupart du temps, orientées en direction des sources d'émission en dehors de la zone proche du point de passage lorsque la direction de la trajectoire et la position des sources évoluent.

Le traitement d'antenne à synthèse d'ouverture consiste ainsi en une recherche permanente d'acquisition des sources d'émission, conduisant à leur détection au seul passage aux points de référence de la trajectoire.

Les étapes de réalisation de la figure 9 reprennent ceux déjà décrits pour la figure 7, à l'exception des étapes (9-3) et (9-4) relatifs au calcul des pondération de phase de voie et du filtrage spatial du signal reçu qui sont spécifique au traitement d'antenne à synthèse d'ouverture.

L'étape (9-3) réalise le calcul de la compensation de phase de l'antenne en gisements $\{G_{iP_0}(t)\}$ selon deux sous-étapes :

a. Une première sous-étape permet de compenser le mouvement du porteur projeté sur les directions attendues du signal émis supposé parfaitement cohérent, de façon à conserver une phase stationnaire pendant la durée de cette intégration. L'effet d'intégration cohérente du signal à phase constante dans le cas d'une antenne mobile est similaire à l'effet d'intégration spatial d'une antenne réseau multi-senseurs dont la géométrie correspondrait à l'ensemble des positions traversées par l'antenne mobile. On peut ainsi constituer un diagramme de réception par sommation des signaux reçus aux différentes récurrences de prélèvement, en tenant compte du mouvement de l'émetteur. La compensation de la phase du déplacement nécessite de disposer d'une estimation de la vitesse et de la direction de déplacement du mobile (et de la source d'émission) afin de corriger le doppler apparent qui rentre dans le calcul de l'incrément de phase à compenser.

Dans le présent mode de réalisation, le filtrage adapté spatial est adapté au seul moment du passage au point de référence. En cela, la présente invention réalise une mise en oeuvre originale de la compensation de phase du déplacement du mobile par rapport au traitement d'antenne synthétique classique. Celle-ci n'est adaptée que pour la direction du mobile au point de passage de référence, et non plus en temps continu, évitant en cela de calculer les angles relatifs des signaux par rapport à une position qui devrait alors être connue en continu le long du déplacement.

b. Une seconde sous-étape permet d'ajouter un ensemble de décalages de phase aux compensations de phase de déplacement précédentes, ces déphasages étant calculés de manière à orienter l'antenne virtuelle de réception dans au moins deux directions adjacentes en gisement proches (voies gauche et voies droite) des directions attendues des signaux au passage au point de référence (formation de voie), réalisant un encadrement de chacune des voies principales formées, en vue de réaliser la détection de la date de passage au point de référence par un critère de type Sigma-Delta ($\Sigma/\Delta$). Cette possibilité d'orienter l'antenne en une direction quelconque constitue un avantage important de l'antenne à synthèse d'ouverture.

L'étape (9-4) réalise le filtrage adapté spatial entre les signaux reçus sur l'antenne mobile (qui contient tous les signaux d'émission reçus de référence) et les voies de directivité à ouverture synthétique (formées via les déphasages calculés en étape (9-3) pointés en gisement en direction des signaux attendus au point de passage.

Il réalise le filtrage spatial dans les directions de pointage de l'antenne fixes en gisement, correspondant aux directions dans lesquelles on veut réaliser la détection des signaux par rapport à la direction de déplacement de la plateforme mobile.

[Fig. 10] décrit un principe supplémentaire et un mode de réalisation préféré mais pas exclusif de détection de passage embarquée d'un mobile en un point de référence particulier d'une trajectoire contrainte, mêlant à la fois le filtrage adapté spatial sur les directions d'arrivée des signaux de références et le filtrage adapté sur les retards et fréquences attendus des signaux de référence, principe connu d'après le brevet [D1] qui décrit le principe de synchronisation en temps et position d'un système de localisation installé à bord d'une plateforme mobile de trajectoire connue et contrainte.

Cette association de filtrages adaptés conjoints sur des caractéristiques physiques complémentaires des signaux attendus a pour objectif d'augmenter la robustesse et la sureté de la détection de passage embarquée, en vue de son application pour des applications critiques.

Dans un mode de réalisation particulier, le filtrage adapté spatial est ici réalisé par un traitement d'antenne à synthèse d'ouverture, mais pourra aussi, sans nuire à la généralité, être réalisé par un traitement d'antenne à formation de voie classique réalisée à partir d'une antenne réseau multi-senseurs.

Dans un modèle de fonctionnement idéal, le principe de détection de passage embarquée « à l'affût », dont un principe est décrit par le brevet EP 3 306 272 A1 dans le cas de signaux GNSS, consiste à réaliser un filtrage adapté continu entre les signaux reçus et les signaux satellites attendus tels qu'ils seront à la position précise et à l'instant de passage du mobile au niveau du point de passage de référence (encore appelé « balise virtuelle » dans le cas d'applications ferroviaires).

Toujours dans un mode de fonctionnement idéal, les signaux GNSS étant déterministes, il est possible d'anticiper la séquence du signal reçu (retard du code, position des satellites, canal doppler) pour chacun des satellites qui seront visibles à la position de la balise virtuelle, au moment du passage du mobile.

Selon cette approche basée sur la synchronisation des phases de code et de porteuse des signaux de référence selon la position, le traitement consiste à réaliser une corrélation (complexe) globale entre le signal reçu sur l'antenne bord et l'ensemble des codes locaux des satellites visibles, synchronisés sur les phases (du code et de la porteuse) attendues des signaux satellites à l'instant de passage et pour la position de la balise virtuelle, et à maximiser cette corrélation, en vue d'obtenir la date de passage du mobile pour la position de passage de référence.

Dans la pratique, si la position du point de passage de référence est parfaitement déterminée, il n'en est pas ainsi du temps local, nécessaire pour synchroniser les codes locaux attendus à l'instant de passage du mobile à la position de la balise virtuelle ; de même, les distances à vue des satellites ne sont pas parfaitement déterminées et sont entachées d'erreur.

Ce mode de réalisation impliquant la synchronisation en temps des signaux au point de passage implique donc que le mobile soit équipé d'un système de transfert de temps (par exemple un récepteur GNSS) pour la synchronisation de son temps local (temps système courant) sur le temps système. On peut retenir dans un mode de réalisation une incertitude de quelques centaines de nanosecondes (disons 1$\mu$s, soit 300m d'incertitude liée au temps)

Pour « couvrir » cette indétermination résiduelle (1 $\mu$s) sur la position du mobile à la date médiane attendue de son passage au niveau de la balise, le brevet EP 3 306 272 A1 prédit un instant de passage médian attendu à la position de référence sur le plan de la trajectoire et mène en parallèle plusieurs filtrages adaptés correspondant aux signaux à recevoir aux différentes postions de références possibles du mobile par rapport à la position de référence,

La présente invention, comme cela a été détaillé par les figures 4 et 5 dans le cas du filtrage adapté spatial, propose une alternative simplificatrice à cette prédiction aléatoire de la date de passage au point de référence, en prédisant les retards et dopplers des signaux attendus au point de passage de référence uniquement au temps courant, l'approximation de la coïncidence des angles au seul point de passage attendu s'appliquant aussi sur les retards et dopplers (aussi appelés phases de code et phase de porteuse) des signaux au point de passage.

Cette prédiction au temps courants des angles, d'arrivée, des retards et des doppler vus du point de passage de référence permet d'éviter de prédire une date de passage et de son intervalle d'incertitude, qui nécessitent alors de multiplier les hypothèses de retard et positions des signaux attendus sur la trajectoire.

Les étapes (10-1) à (10-4) liées au filtrage adapté spatial par antenne à synthèse d'ouverture restent donc identiques aux étapes (9-1) à (9-4) de la figure 9 qui décrit le même traitement.

Une fois choisie la position du point de passage de référence suivant, $P_0(j)$, il devient possible de prédéterminer (étape (10-7)) les phases de codes $\varphi_{Ci}(P_0(j),t_c)$ et les dopplers de porteuse de chaque satellites i reçu à chaque position de passage de référence, au temps courant, $t_c$, par le biais de l'estimation de la distance émetteurs - position de passage de référence, la position des émetteurs étant calculée par le biais de leurs éphémérides.

Le traitement de détection de la date de passage au plus près du point de passage de référence se décompose comme suit :

- étape (10-8) , génération au temps courant des codes locaux, $\{Ci(t)\}Be$ , via des NCO pilotés à partir de la phase de code attendue à l'instant tc, pour chacun des signaux reçu sur chacune des positions des points de passage de référence
- étape (10-8) , calcul de la fonction d'inter corrélation entre le signal reçu courant sur le porteur et chacun des codes locaux correspondant aux émetteurs et positions des points de passage de référence
- étape (10-9) , Le filtrage adapté est réalisé pour chacun des émetteurs, qui fourniront autant de fonctions de corrélation spatiales le long du déplacement (curviligne) du mobile. Les fonctions de corrélations obtenues pour les différents émetteurs (Ne) sont ensuite accumulées quadratiquement, ce qui permet de renforcer le rapport signal à bruit (C/N0) de Slog(Ne), fournissant ainsi une meilleure sensibilité et une meilleur précision sur la date et la position de l'abscisse de détection du maximum de corrélation.
- étape (10-9) , Sommation non-cohérente des sorties d'intercorrélation pour les signaux reçus sur un même point de passage de référence ;
- étape (10-10) , Détection du maximum de puissance au passage du mobile sur la position de référence (P0(i))
- étape (10-11) , Détection de passage par maximisation du critère $(\Sigma /\Delta)$ des voies adjacentes, et calcul la date de passage précise par la méthode des voies adjacentes.

Ce dernier principe et mode de réalisation offre ainsi deux avantages majeurs par rapport à une solution de détection de passage embarquée basée sur la seule synchronisation des phases de code et de porteuse :

- le traitement de formation de voie spatial (qu'il soit réalisé classiquement à partir d'une antenne réseau, ou bien à partir d'une antenne à synthèse d'ouverture) permet de réduire les sources d'interférence, de leurrage et les trajets multiples susceptibles de diminuer la précision et la disponibilité de la détection de passage embarquée, basé sur des signaux de radio-navigation
- la mise en oeuvre conjointe de caractéristiques complémentaires des signaux attendus permet d'augmenter naturellement la confiance de la détection et de la datation du passage en réduisant le risque de non-intégrité des mesures

**Meilleur mode de réalisation de l'invention**

[Fig. 11] décrit, un mode de réalisation préféré mais non limitatif du procédé selon l'invention, appliqué au système de localisation ponctuelle, adapté à une mise en oeuvre dans le domaine ferroviaire pour déterminer la date de passage d'un train parmi un ensemble de balises de référence, dites virtuelles, disposées sur des lignes ferroviaires.

Ce mode de réalisation particulier met en oeuvre le traitement, dont le principe a été exposé en figure 10, réalisant la détection de passage embarquée d'un mobile en un point de référence particulière d'une trajectoire contrainte, mêlant à la fois le filtrage adapté spatial sur les directions d'arrivée des signaux de références et le filtrage adapté sur les retards et fréquences attendus des signaux de référence.

La disponibilité croissante de signaux GNSS de plus en plus précis et intègres laisse envisager leur intégration dans les systèmes de navigation futurs de véhicules de plus en plus autonomes. L'utilisation des signaux GNSS est donc aussi envisagée pour contribuer à la localisation et à la navigation ferroviaires, notamment via leur intégration dans les standards européens ETC S-ni v. 3.

Dans cette logique, la figure 11 propose un mode de réalisation basé sur des signaux satellites synchronisés par des codes d'étalement et à phase cohérente du type des signaux GNSS, mettant aussi en oeuvre, pour le filtrage adapté spatial, un traitement d'antenne à synthèse d'ouverture.

Une telle mise en oeuvre du traitement d'antenne à synthèse d'ouverture a déjà été imaginé pour une utilisation ferroviaire par le brevet [D3] (« Procédé de localisation d'une source de brouillage de signaux d'un système de navigation par satellites et système associé ») en vue de caractériser l'environnement électromagnétique (sources de brouillage, d'interférence et de leurrage) le long de lignes ferroviaires. De même, le brevet [D2] (« Dispositif d'antenne à synthèse d'ouverture de réception de signaux d'un système comprenant une porteuse et des moyens de détermination de sa trajectoire ») décrit le principe d'une antenne à synthèse d'ouverture appliquée à l'acquisition et la poursuite en continu de signaux GNSS, applicable notamment pour le rail, mais aussi pour des applications spatiales ou aéronautiques.

Bien que le rail constitue un domaine d'application préféré en raison du besoin de sureté et des programmes de géoréférencement des lignes ferroviaires en cours, le procédé et le système de localisation ponctuelle par détection de passage embarquée selon l'invention peuvent aussi s'appliquer à tout moyen de locomotion ou véhicule terrestre se déplaçant sur des segments curvilignes ou rectilignes, géoréférencés. Ce peut être le cas, par exemple, dans le domaine maritime, pour le positionnement de navires évoluant dans des « rails de navigation », dans le domaine spatial pour le recalage des trajectoires de satellites à orbites basses ; dans le domaine du transport terrestre par exemple, pour la localisation ou la détection de passage embarquée de véhicules de transport.

La figure 11 présente un mode de réalisation selon l'invention du procédé sur la base des signaux GNSS, selon le principe de l'antenne à synthèse d'ouverture, adapté pour la détection de passage embarquée par filtrage adapté conjoint des domaines spatial, temporel et fréquentiel en des points de référence (balises virtuelles) attendus de la ligne ferroviaire,

Selon le principe de la détection de passage embarquée décrit en figure 4, les directions en gisement prédites des sources d'émission vue du point de passage de référence sont calculées au temps courant et non au temps prédit, et sont donc actualisées continûment pour permettre le suivi du déplacement des sources d'émission, bien que la position de référence reste fixe pendant cette observation.

L'intégration cohérente est réalisée en tenant compte du déplacement du porteur.

- L'étape (11-1) effectue le calcul de la position et de la vitesse de chacun des satellites (q), à partir des éphémérides connus des satellites, au temps courant GNSS, $t_i$ (synchronisé sur un pulse de référence), après compensation au premier ordre des temps de propagation des signaux entre le satellite et la position de la balise virtuelle. Ce calcul suppose que le temps GNSS est résolu par ailleurs, ou encore établi à partir d'un temps de référence (UTC) disponible.

- L'étape (11-10) réalise une synchronisation de la base de temps local du récepteur sur la référence de temps du système GNSS grâce à un pulse précis fourni par la référence de temps système (qui peut être un autre récepteur GNSS ou tout autre dispositif de distribution du temps GNSS ou UTC basé sur une horloge ultra-stable de référence. Cette base de temps sert à synchroniser les époques de calcul pour l'estimation de la position et vitesse des satellites (11-1) qui participent au calcul de la direction prédite des satellites à la position de la prochaine balise (11-18).

- L'étape (16) réalise la lecture des données topographique de la voie, à partir d'une base de données installée à bord train ou rendu accessible via les moyens de communication bord ; elle fournit en particulier les positions géodésiques des balises virtuelles ainsi que le cap de la voie aux positions des balises virtuelles.

- L'étape (11-17) permet de sélectionner la prochaine balise virtuelle à prendre en compte, compte tenu de la position courante entretenue du train sur la voie

- L'étape (11-18) permet de déterminer la direction des satellites vus de la prochaine balise et au temps courant GNSS $t_i$, la coïncidence entre les directions réelles des satellites et les directions estimées n'étant accomplie qu'à l'instant du passage du train sur la position de la balise virtuelle.

- L'étape 11-23 réalise la sélection des satellites visibles depuis la position de la prochaine balise virtuelle (déterminée à l'étape 11-7), au temps courant GNSS $t_i$ en prenant éventuellement un masque de visibilité des directions satellites en azimut-élévation aux positions des balises

- L'étape (11-19) permet la détermination du cap de la voie au point de passage de la prochaine balise virtuelle, à partir de la base de données de relevé topographique des voies, accessible au système de détection de passage embarquée.

- L'étape (11-20) détermine le vecteur vitesse du porteur au passage de la balise virtuelle estimé au temps courant, établi sur la base d'une mesure extérieure de la vitesse linéaire (fournie par des capteurs complémentaires) et du cap de la voie à la position de la balise virtuelle

- L'étape (11-7) effectue une estimation au temps GNSS courant (synchronisé sur un pulse physique fourni par la référence de temps) de la valeur prédite du Doppler, $df_q$, dérivée de la phase de porteuse, correspondant au seul déplacement du satellite vue de la position de la prochaine balise virtuelle en réception de chacun des signaux GNSS. Cette estimation est réalisée à chaque époque de mesure courante ($t_i$) (cadencé par un pulse physique produit par la référence de temps GNSS ) pour chacun des satellites GNSS visible depuis la position de la prochaine balise virtuelle ($P_0(i)$), par calcul de leurs vitesses apparentes précises vue de la balise virtuelle ($Vs_q$).

- L'étape (11-8) réalise la génération d'un signal à la fréquence attendue du canal Doppler est faite par un oscillateur à commande numérique de porteuse. La valeur calculée du Doppler prédit, dfq , permet l'adaptation du NCO porteuse (phase de porteuse) du récepteur (11-8) sur la valeur du Doppler de porteuse correspondant à la vitesse du satellite.

- L'étape (11-9) réalise le filtrage adapté en fréquence porteuse selon un des principes de l'invention décrit en figure 10, qui utilise le doppler attendu de déplacement des satellites vu de la balise virtuelle. Le signal reçu S(t) est multiplié par un multiplicateur (11-9) par le signal généré (11-8) par l'oscillateur à commande numérique de porteuse.

- L'étape (11-2) effectue le calcul de la correction de la phase de porteuse supplémentaire permettant de compenser l'évolution de la phase liée au déplacement du seul porteur dans la direction $\vec{d}_q$ de la voie de visée (en gisement) depuis la position de la prochaine balise, relativement à la direction de déplacement $\overrightarrow{Vp}$ du train telle qu'elle sera au passage de la prochaine balise virtuelle; cette correction s'ajoute à la correction classique de Doppler du satellite pour reconstituer la direction des voies de directivité à ouverture synthétique.

Cette correction de phase correspond à la projection de la vitesse de déplacement du porteur (défini par la vitesse estimée (11-3) au temps courant et par le cap en azimut de la direction de la voie à la position de la balise virtuelle), sur la direction de chaque satellite visé par l'antenne (il existe autant de corrections de phase que de directions visées, ceci pour chacun des satellites poursuivis).

Cette correction (11-2) de phase est calculée par l'expression suivante :

$$2\pi . f_0 . (t_i - t_k) . \vec{d}_q . \frac{\overrightarrow{V_p}}{C}$$

où

$f_0$ représente la fréquence du canal Doppler considéré (on procède de façon identique sur l'ensemble des K canaux doppler), en Hz;

$t_k$ représente l'instant de début d'intégration cohérente 4 qui fournit la date d'origine de la phase, en s;

$t_i$ représente l'instant GNSS courant;

$\overrightarrow{d_q}$ représente le vecteur unitaire de la direction du satellite vue du porteur (vecteur unitaire), en coordonnées cartésiennes ;

$\overrightarrow{V_p}$ représente le vecteur vitesse du porteur, en m/s; et

$C$ représente la vitesse de la lumière, en m/s.

L'étape (11-4) utilise cette phase pour commander un oscillateur à commande numérique NCO de phase de porteuse (11-5) qui permet de générer et entretenir un signal de correction de la porteuse pour chacun des satellites. Il existe ainsi autant d'oscillateurs à commande numérique 11-4) de phase de porteuse que de directions de voie en gisement.

La phase de porteuse d'un satellite est ainsi corrigée de la phase correspondant à la direction de visée, par les oscillateurs à commande numérique (11-4) et multiplicateurs (11-5).

L'étape (11-5) permet la compensation du déplacement du porteur pour maintenir la phase porteuse constante, réalisant ainsi le filtrage adapté selon les angles en gisement des signaux attendus au point de passage. Le traitement d'antenne à synthèse d'ouverture selon l'invention, décrit en figure 9, est mise en oeuvre en utilisant le doppler prédit du déplacement du porteur dans les directions satellites, vu de la balise virtuelle.

La compensation de phase porteuse imposée au cours du déplacement du porteur à vitesse et cap connus réalise le filtrage adapté par corrélation en direction de chacun des signaux attendus (signaux satellites locaux prédits à la position de la balise virtuelle) avec le signal satellite reçu, ceci pendant une durée T d'intégration cohérente (11-6).

L'application des compensations de phase dans chaque direction visée est synchronisée avec l'application de l'intégration cohérente (11-6).

- L'étape (11-13) effectue une estimation au temps GNSS courant (synchronisé sur un pulse physique fourni par la référence de temps) des valeurs prédites des phases de code attendues correspondant aux retards de propagation $t_q$ des signaux à la position géoréférencée de la prochaine balise virtuelle, au temps GNSS courant $t_i$. La synchronisation du code local (pour chacune des directions de voie) est réalisée par commande du retard de code (11-13) à appliquer sur la génération d'un signal du code local GNSS (modulation type BPSK) par un oscillateur à commande numérique NCO code (11-14), et calculée à partir de l'étape (11-1) de détermination des valeurs attendues en retard

- Le NCO code (11-14) réalise la synchronisation du code local GNSS sur la valeur du temps GNSS reçu (phase de code) prédit au temps courant pour la position de la balise virtuelle. Cette estimation est réalisée à chaque instant (cadencé par le 1PPS) pour chacun des satellites GNSS visible depuis la position de la balise virtuelle, par calcul de la distance apparente précises vue de la balise virtuelle ainsi que des retards supplémentaires dus à la propagation ionosphérique, troposphériques, des retards de groupe liés à l'émetteur, au récepteur et aux défauts de synchronisation résiduels entre les satellites émetteurs et le récepteur.

- L'étape (11-15) réalise le filtrage adapté en phase de code selon un des principes de l'invention décrit en figure 10, qui utilise le retard prédit des signaux des satellites vu de la balise virtuelle, incluant le retard de propagation ainsi que les biais connus du système (retards de groupe, bras de levier, erreur de synchronisation). Le signal reçu S(t) est multiplié par un multiplicateur (11-15) par le signal généré (11-14) par l'oscillateur à commande numérique de code.

- L'étape (11-6) réalise l'intégration cohérente après corrélation du signal reçu et du signal local attendu selon la fréquence, le gisement et le retard. La durée de l'intégration cohérente doit être compatible de la stationnarité de phase des signaux reçus et spécifiquement du rythme de transmission des données du message de navigation des signaux GNSS (50 bit/s dans le cas GPS). Elle détermine aussi la longueur apparente de l'antenne synthétique, aussi fonction de la vitesse de déplacement du train. Par exemple, la durée de corrélation élémentaire des codes PRN GPS étant de 1ms, l'équivalence d'un échantillonnage spatial à Shannon (< l/2) impose que la vitesse du train ne dépasse pas 100m/s

- A l'étape (11-12), l'intégration non cohérente est réalisée sur chaque voie en gisement, après intégration cohérente et détection quadratique (11-11). La puissance reçue peut être alors estimée par sommation des sorties de voie en gisement, sous l'hypothèse d'un déplacement rectiligne pendant la durée d'intégration non cohérente (11-12).
En sortie de l'intégration non cohérente (11-12), on dispose de la puissance du signal reçu dans chacune des directions de voies en gisement, adaptée à différentes durées d'intégration non cohérentes.

- L'étape (11-21) effectue le cumul des puissances intégrées, estimées pour chaque direction gisement, réalisant ainsi un filtrage adapté multivoies adaptées aux directions d'arrivées en gisement des signaux satellite au passage à la position de la balise virtuelle.

(i) Lorsque le train arrive à proximité de la position de la balise virtuelle, les directions du filtrage spatial en gisement coïncident avec celles des signaux reçus, ainsi que les retards et fréquences de code et de porteuse. La fonction de corrélation ainsi constituée mesure donc la vraisemblance de la position qui passe par un maximum à la position exacte de la balise virtuelle. Le filtrage spatial réalisé par le traitement d'antenne synthétique apporte un gain supplémentaire sur le rapport signal à bruit en réception des signaux GNSS qui participe à augmenter la précision et la disponibilité de la détection. Le filtrage spatial contribue aussi à améliorer la robustesse du filtrage adapté classique des signaux GNSS en retard et fréquence, en réduisant l'impact des interférences et trajets multiples qui arrivent en dehors du lobe de directivité des voies formées.

(ii) Dans les zones plus éloignées de la position de la balise virtuelle, l'existence de coïncidences simultanées et stables d'artefacts susceptibles d'apparaitre à la fois en gisement, retard et fréquence est extrêmement rare, et conduit à réduire le risque de non intégrité (risque de détecter une position erronée ou ambiguë sans avertissement par le calculateur électronique.

- L'étape (11-22) réalise la détection de passage embarquée par un maximum de vraisemblance et la datation précise de ce passage selon différentes approches possibles (par exemple mettant en oeuvre un enregistrement des sorties, une interpolation temporelle, un couplage avec un capteur de vitesse externe) non détaillées ici.

**Applications industrielles possibles de l'invention**

L'invention, appliquée au système de localisation ponctuelle, est adaptée à une mise en oeuvre dans le domaine ferroviaire pour déterminer la date de passage d'un train parmi un ensemble de balises de référence, dites virtuelles, disposées sur des lignes ferroviaires.

Mise en oeuvre possible du principe à toutes formes de positionnement utilisant des routes contraintes à faible variation de dynamique :

i) Les systèmes de positionnement maritime dans les « rails » de navigation
ii) Les systèmes de communication et de navigation spatiaux sur orbites fixes
iii) Des systèmes terrestres de vérification de passages à des positions obligatoires, péages, douanes

**Revendications**

1. Procédé de détection de passage d'un mobile en des points particuliers de son déplacement contraint le long d'une trajectoire curviligne, appliqué en réception des trajets de propagation directs de signaux transmis par des sources d'émission de référence fixes ou mobiles spatialement séparées, ledit procédé permettant de réaliser une estimation de la date de passage par filtrage adapté spatial portant sur les angles en gisement et élévation des signaux reçus, ladite estimation de la date de passage par filtrage adapté spatial consistant :

- à rechercher, pour ces points de passages, l'instant présentant la meilleure correspondance, vue depuis le mobile, entre les angles d'incidence prédits et les angles d'incidence effectivement reçus des signaux transmis par les sources d'émission de référence ,

- à déterminer la date correspondant à cet instant dans la base de temps locale de réception du mobile,

le procédé étant **caractérisé en ce que** :

- les positions géographiques et la courbure de la trajectoire curviligne aux points de passage sont connues et accessibles à partir d'une base de données topographique,
- la position et la vitesse de chacun des émetteurs sont estimées, au temps local courant de réception, à partir de la connaissance des éphémérides des trajectoires ou des positions des sources de référence,
- les bases de temps locales des systèmes d'émission et de réception sont synchronisées grossièrement avec une précision minimisant l'erreur d'angle de réception liée à la vitesse de défilement angulaire apparente des sources émettrices, typiquement de l'ordre de 1s dans le cas de satellites GNSS,

ledit procédé de détection de passage par filtrage adapté spatial comportant les étapes suivantes :

- extraction des coordonnées géographiques et de la direction de déplacement correspondant aux différents points de passage à partir d'une base données topographique de la trajectoire curviligne,
- calcul des positions et vitesses des sources émettrices au temps courant de réception du mobile, à partir des éphémérides des trajectoires ou des positions de référence des sources,
- prédiction au temps courant de réception, pour chaque point de passage et chacun des émetteurs de référence, des angles de réception en gisement et en élévation des signaux par rapport à la direction de déplacement du mobile, établie à partir des positions calculées des sources d'émission au temps courant de réception, des positions des points de passage et des directions en azimut du déplacement du mobile sur sa trajectoire contrainte aux points de passage,
- estimation de la coïncidence spatiale entre les angles de réception effectifs des signaux de référence au temps courant de réception et les angles de réception prédits des signaux pour les points de passage au temps courant de réception, selon différents procédés de filtrage adapté spatial,
- détermination, pour chaque point de passage sur la trajectoire de référence, de la date, dans la base de temps locale de réception, pour laquelle la coïncidence spatiale des directions reçues et des directions prédites est maximale et identification de cette date comme la plus probable du passage du mobile au point de passage considéré.

2. Procédé, selon la revendication 1, de détection de passage embarquée par recherche de coïncidence des directions reçues et des directions prédites en gisement et élévation des sources d'émission de référence aux points de passage, **caractérisé en ce que** les directions d'incidence des signaux de référence sont extraites par traitement spatial d'antenne et comparées, pour minimisation, avec les directions attendues des sources d'émission au point de passage de référence selon une métrique d'écart angulaire

3. Procédé, selon la revendication 1, de détection de passage embarquée par filtrage adapté spatial des directions attendues des sources d'émission de référence aux points de passage, **caractérisé en ce que** la détection de coïncidence en gisement et élévation des directions d'arrivée des signaux attendus au point de passage de référence est mise en oeuvre par une formation de voies de directivité qui réalise un filtrage adapté spatial prépositionné dans lesdites directions d'arrivées attendues des sources d'émission pour maximisation de la puissance multi-sources reçue

4. Procédé, selon les revendications 1 et 3, de détection de passage embarquée d'un mobile par formation de voies, **caractérisé en ce que** le traitement de formation de voies de directivité, appliqué à des signaux stationnaires et cohérents temporellement et spatialement, est réalisé par intégration cohérente des signaux reçus, après compensation de la phase du signal reçu, correspondant à la projection du déplacement du mobile, de vitesse connue en temps réel, dans la direction d'émission de chaque signal de référence, supposé à phase cohérent, le tout formant ainsi un traitement de filtrage spatial dit antenne à synthèse d'ouverture.

5. Procédé, selon les revendications 1 à 4, de détection de passage embarquée d'un mobile, **caractérisé en ce qu'**il comporte une étape de calcul en temps courant des directions de pointage des voies de directivité prépositionnées dans les directions d'arrivées attendues des signaux transmis par sources de référence, pour la position de réception correspondant au point de passage de référence choisi et les positions, calculées au temps courant, des sources de référence, dont les trajectoires sont supposées connues, dans les mêmes référentiels spatiotemporels, la direction déplacement du mobile considérée au point de référence étant connue et déterminée à partir d'une carte géoréférencée de la trajectoire.

**6.** Procédé, selon la revendication 5, de détection de passage embarquée d'un mobile, **caractérisé en ce que** les directions de pointage des voies de directivité prépositionnées sont calculées, non plus au temps courant, mais pour un encadrement du temps de passage prédit, déterminé selon un modèle de la dynamique de déplacement du mobile sur la trajectoire, ledit encadrement devant être compatible de l'imprécision induite sur les directions d'incidences attendues des signaux de référence au point de passage

**7.** Procédé, selon les revendications 1 à 6 précédentes, de détection de passage embarquée d'un mobile dans lequel les bases de temps locales des systèmes d'émission et de réception sont synchronisées précisément, typiquement de l'ordre d'une microseconde dans le cas de satellites GNSS, **caractérisé en ce que** le filtrage adapté spatial en gisement des directions des signaux de référence, est complété par un filtrage adapté temporel et un filtrage adapté fréquentiel des retards et dopplers attendus des signaux reçus au point de passage de référence pour le temps courant.

**8.** Procédé, selon les revendications 3 à 7 précédentes, de datation du passage par filtrage adapté spatial, **caractérisé en ce que** plusieurs voies de directivité adjacentes en gisement sont créées et orientées autour de la direction attendue de chacun des signaux de référence au point de passage pour créer en parallèle au moins 3 voies de directivités équidistantes en gisement se recoupant spatialement à -3dB, permettant de déterminer le moment précis du passage au point de référence par maximisation d'un critère de détection du type Sigma-Delta ($\Sigma/\Delta$) lorsque la voie centrale est de puissance maximale et que simultanément les voies latérales sont symétriquement de même puissance.

**9.** Dispositif de détection de passage embarquée d'un mobile évoluant sur une trajectoire contrainte, de tracé connu, implantant les procédés des revendications 1 à 8, **caractérisé en ce qu'**il comprend :

   - une antenne,
   - un récepteur de positionnement adapté à l'acquisition et à la poursuite des signaux de référence en temps et en fréquence,
   - une base de temps, mesurant le temps courant, synchronisée sur le temps système d'émission des signaux par l'intermédiaire du récepteur de positionnement,
   - une cartographie géoréférencée de la trajectoire et des points de référence,
   - des moyens de calcul pour réaliser le traitement d'antenne et la détection de passage par détection d'un maximum de puissance de la fonction de corrélation au moment du passage du mobile en ce point, selon les revendications 1 à 8 précédentes.

**10.** Dispositif de détection de passage embarquée d'un mobile selon les revendications précédentes pour lequel les signaux reçus sont des signaux GNSS et le mobile est un train se déplaçant sur un ensemble de voies géoréférencées.

**Revendications modifiées conformément à la règle 137(2) CBE.**

**1.** Procédé de localisation ponctuelle d'un véhicule, dit le Mobile, se déplaçant sur une trajectoire curviligne contrainte de tracé connu, dite trajectoire de référence (2-1), réalisant une détection de passage du Mobile au plus près de positions prédéterminées de la trajectoire de référence (2-2), ledit procédé étant mis en œuvre par un dispositif de localisation composé d'un récepteur de géo-positionnement, un calculateur et des programmes informatiques utilisé en réception de signaux de positionnement transmis par des sources d'émission de référence fixes ou mobiles spatialement séparées, ledit procédé permettant de fournir une estimation de la date de passage par filtrage adapté spatial portant sur les angles d'incidence en gisement et élévation des signaux reçus, dit directions d'incidence, ladite estimation de la date de passage par filtrage adapté spatial consistant :

   - à rechercher, pour ces points de passages, l'instant présentant la meilleure correspondance, vue depuis le mobile, entre les angles d'incidence prédits et les angles d'incidence effectivement reçus des signaux transmis par les sources d'émission de référence ,
   - à déterminer la date correspondant à cet instant dans la base de temps locale de réception du Mobile,
   le procédé étant **caractérisé en ce que** :

      - les positions géographiques et la courbure de la trajectoire de référence aux points de passage sont connues et accessibles à partir d'une base de données topographique,
      - la position et la vitesse de chacun des émetteurs sont estimées, au temps local courant de réception, à partir de la connaissance des éphémérides des trajectoires ou des positions des sources de référence,
- les bases de temps locales des systèmes d'émission et de réception sont synchronisées grossièrement avec une précision minimisant l'erreur d'angle de réception liée à la vitesse de défilement angulaire apparente des sources d'émission de référence, typiquement de l'ordre de 1s dans le cas de satellites GNSS,

ledit procédé de détection de passage par filtrage adapté spatial comportant les étapes suivantes :

- extraction des coordonnées géographiques et de la direction de déplacement correspondant aux différents points de passage à partir d'une base données topographique de la trajectoire de référence (1-6),
- calcul des positions et vitesses des sources d'émission de référence au temps courant de réception du Mobile, à partir des éphémérides des trajectoires ou des positions de référence des sources (1-6),
- prédiction au temps courant de réception, pour chaque point de passage et chacune des sources d'émission de référence, des directions d'incidence en gisement et en élévation des signaux par rapport à la direction de déplacement du Mobile, établie à partir des positions calculées des sources d'émission de référence au temps courant de réception, des positions des points de passage et des directions en azimut du déplacement du Mobile sur sa trajectoire de référence aux points de passage (1-8),
- estimation de la coïncidence spatiale entre les directions d'incidence effectives des signaux de référence au temps courant de réception et les directions d'incidence prédites des signaux pour les points de passage au temps courant de réception, selon différents procédés de filtrage adapté spatial (1-10),
- détermination, pour chaque point de passage sur la trajectoire de référence, de la date, dans la base de temps locale de réception, pour laquelle la coïncidence spatiale des directions d'incidence reçues et des directions d'incidence prédites est maximale et identification de cette date comme la plus probable du passage du Mobile au point de passage de référence considéré (1-12).

2. Procédé, selon la revendication 1, de détection de passage embarquée par recherche de coïncidence des directions d'incidence reçues (3-3) et des directions d'incidence prédites en gisement et élévation des signaux issus des sources d'émission de référence aux points de passage (3-2), **caractérisé en ce que** les directions d'incidence des signaux de référence sont extraites par traitement spatial d'antenne (3-3) et comparées, pour minimisation, avec les directions d'incidence attendues des sources d'émission de référence au point de passage de référence selon une métrique d'écart angulaire (3-4)

3. Procédé, selon la revendication 1, de détection de passage embarquée par filtrage adapté spatial des directions d'incidence attendues des sources d'émission de référence aux points de passage, **caractérisé en ce que** la détection de coïncidence en gisement et élévation des directions d'incidence des signaux attendus au point de passage de référence est mise en œuvre par une formation de voies de directivité (7-4) qui réalise un filtrage adapté spatial prépositionné dans lesdites directions d'incidence attendues des signaux issus des sources d'émission de référence (7-2) pour maximisation de la puissance multi-sources reçue (7-7) (7-8)

4. Procédé, selon les revendications 1 et 3, de détection de passage embarquée d'un mobile par formation de voies, **caractérisé en ce que** le traitement de formation de voies de directivité, appliqué à des signaux stationnaires et cohérents temporellement et spatialement, est réalisé par intégration cohérente des signaux de référence reçus (9-6), après application d'une compensation de phase du signal (9-3) correspondant à la projection du déplacement du Mobile, de vitesse connue en temps réel, selon la direction d'incidence du signal pour chacune des sources d'émission de référence, le tout formant ainsi un traitement de filtrage spatial (9-4) dit antenne à synthèse d'ouverture.

5. Procédé, selon les revendications 1 à 4, de détection de passage embarquée d'un mobile, **caractérisé en ce qu'**il comporte une étape de calcul en temps courant (5-2) des directions de pointage des voies de directivité prépositionnées dans les directions d'incidence attendues des signaux transmis par les sources d'émission de référence, pour la position de réception correspondant au point de passage de référence choisi et les positions, calculées au temps courant, des sources de référence, supposées connues dans les mêmes référentiels spatio-temporels, la direction déplacement du Mobile considérée au point de passage de référence étant connue et déterminée à partir d'une carte géoréférencée de la trajectoire de référence.

6. Procédé, selon les revendications 1 à 4, de détection de passage embarquée d'un mobile, **caractérisé en ce que** les directions de pointage des voies de directivité prépositionnées sont calculées, non plus au temps courant, mais pour un encadrement du temps de passage prédit (3-2), déterminé selon un modèle de la dynamique de déplacement du Mobile sur la trajectoire de référence, ledit encadrement devant être compatible de l'imprécision induite sur les directions d'incidences attendues des signaux de référence au point de passage de référence

**7.** Procédé, selon les revendications 1 à 6 précédentes, de détection de passage embarquée d'un mobile dans lequel les bases de temps locales des systèmes d'émission et de réception sont synchronisées précisément (11-10), typiquement de l'ordre d'une microseconde dans le cas de satellites GNSS, **caractérisé en ce que** le filtrage adapté spatial des directions d'incidence des signaux de référence, est complété par un filtrage adapté temporel (10-8) et un filtrage adapté fréquentiel (10-6) des retards et dopplers attendus des signaux reçus au point de passage de référence pour le temps courant.

**8.** Procédé, selon les revendications 3 à 6 précédentes, de datation du passage par filtrage adapté spatial, **caractérisé en ce que** plusieurs voies de directivité adjacentes en gisement sont créées et orientées autour de la direction d'incidence attendue de chacun des signaux de référence au point de passage de référence pour créer en parallèle au moins 3 voies de directivités équidistantes en gisement se recoupant spatialement à -3dB, permettant de déterminer le moment précis du passage au point de passage de référence par maximisation d'un critère de détection du type Sigma-Delta ($\Sigma/\Delta$) lorsque la voie centrale est de puissance maximale et que simultanément les voies latérales sont symétriquement de même puissance (9-8).

**9.** Dispositif embarqué de localisation ponctuelle par détection de passage d'un mobile évoluant sur une trajectoire de référence, de tracé connu, implantant les procédés des revendications 1 à 8, **caractérisé en ce qu'**il comprend :

- une antenne de réception des signaux de référence,
- des moyens de tachymétrie configurés pour délivrer une mesure de la vitesse du Mobile le long de la dite trajectoire de référence,
- au moins un récepteur de positionnement adapté à l'acquisition et à la poursuite des signaux de référence en temps et en fréquence,
- une base de temps, mesurant le temps courant, synchronisée sur le temps système d'émission des signaux par l'intermédiaire du récepteur de positionnement,
- une cartographie géoréférencée de la trajectoire et des points de référence,
- des moyens de calcul pour réaliser le traitement d'antenne et la détection de passage par détection d'un maximum de puissance de la fonction de corrélation au moment du passage du Mobile en ce point, selon les revendications 1 à 8 précédentes.

**10.** Dispositif de détection de passage embarquée d'un mobile selon les revendications précédentes pour lequel les signaux reçus sont des signaux GNSS et le mobile est un train se déplaçant sur un ensemble de voies géoréférencées.

## [Fig.1]

1-02

1-04

| Box | Phase |
|---|---|
| 1-06 | Phase d'initialisation |
| 1-08 | |
| 1-10 | Phase de recherche |
| 1-12 | |
| 1-14 | Phase d'exploitation des résultats |

[Fig.2]

Fig.2A

Fig.2B

$\overrightarrow{G_{1P0}(\widehat{t_0})}$

$P_{E1}(\widehat{t_0})$

$\overrightarrow{V(\widehat{t_0})}$

$\overrightarrow{S_{1P}(\widehat{t_0})}$

$\overrightarrow{S_{2P}(\widehat{t_0})}$

$P_{E1}(\widehat{t_0})$

$\Theta_1(\widehat{t_0})$

$P_{E2}(\widehat{t_0})$

$P_{E1}(t)$

$P_{E2}(t)$

$\overrightarrow{G_{1P0}(\widehat{t_0})}$

$\Theta_2(\widehat{t_0})$

$\overrightarrow{G_{2P0}(\widehat{t_0})}$

$\overrightarrow{S_{2P}(t)}$

$P_{E2}(\widehat{t_0})$

$\Theta_1(\widehat{t_0})$

$P_0$

$\overrightarrow{S_{1P}(t)}$

$\overrightarrow{V(t)}$

$P(t)$

$\Theta_2(\widehat{t_0})$

$\Theta_3(\widehat{t_0})$

$\overrightarrow{S_{3P}(\widehat{t_0})}$

(𝒯) Trajectoire
du mobile

$\overrightarrow{G_{2P0}(\widehat{t_0})}$

$\overrightarrow{G_{3P0}(\widehat{t_0})}$

$\Theta_3(\widehat{t_0})$

$\overrightarrow{S_{3P}(t)}$

$P_{E3}(\widehat{t_0})$

$\overrightarrow{G_{3P0}(\widehat{t_0})}$

$P_{E3}(t)$

$P_{E3}(\widehat{t_0})$

[Fig.3]

Point de passage P0
sur la trajectoire

{Ephémérides}
des émetteurs

Date de passage prédite
approximative t0

Détermination des émetteurs
visibles au point de passage
$P_0$, à l'instant cde passage
prédit t0                    3-1

Positions émetteurs à t0

{Ei}          P0

Azimut de la direction
de la trajectoire au
point P0 [Az($P_0$)]

Calcul de la direction en
gisement-élévation  $G_{iP0}(t0)$
de l'émetteur {$E_i$} vue du
point de passage $P_0$ à l'instant
de passage prédit t0      3-2

Positions émetteurs à t0

{$G_{iP0}(t0)$}

Signal reçu {$S_{iP}$} au
temps courant t pour
la position courante
du mobile

Extraction des directions
d'arrivée en gisement-
élévation des signaux
détectés par traitement
antenne réseau au temps
courant              3-3

{$G_{iP}(t)$}

Comparaison en gisement des
angles reçus au temps
courant t et des angles prédits
à t0                    3-4

Détection de la meilleure
correspondance entre les
angles gisement prédits et
reçus                  3-5

[Fig.4]

Fig.4A $\qquad$ $P_{E1}(t)$ $\qquad$ Fig.4B

$\vec{V}(t)$

$\vec{G_{1P0}}(t)$

$\vec{S_{1P}(t)}$

$\Theta_1(t)$

$\vec{S_{2P}(t)}$

$P_{E2}(t)$

$\vec{G_{1P0}}(t)$

$\Theta_2(t)$

$\vec{G_{2P0}}(t)$

$P_{E1}(t)$ $\qquad$ $\vec{S_{1P}(t)}$ $\qquad$ $P_{E2}(t)$

$\vec{S_{2P}(t)}$

$\Theta_1(t)$

$\vec{V}(t)$

$P_0$

$\Theta_3(t)$

$P(t)$ $\qquad$ $\Theta_2(t)$

$\vec{S_{3P}(t)}$

$\vec{G_{3P0}}(t)$

$(\mathcal{J})$ Trajectoire du mobile

$\vec{G_{2P0}}(t)$

$P_{E3}(t)$

$\Theta_3(t)$ $\qquad$ $\vec{S_{3P}(t)}$

$\vec{G_{3P0}}(t)$ $\qquad$ $P_{E3}(t)$

# [Fig.5]

Point de passage P0
sur la trajectoire

{Ephémérides}
des émetteurs

Détermination des émetteurs
visibles au point de passage
$P_0$, à l'instant courant t
5-1

Positions émetteurs à t

{Ei}          P0

Azimut de la direction
de la trajectoire au
point P0 [Az($P_0$)]

Calcul de la direction en
gisement $G_{iP0}(t)$ de l'émetteur
{$E_i$} vu du point de passage
$P_0$ à l'instant courant t
5-2

Positions émetteurs à t

{$G_{iP0}(t)$}

Signal reçu {$S_{iP}$} au
temps courant t pour
la position courante
du mobile

Extraction des directions
d'arrivée en gisement des
signaux détectés par
traitement antenne réseau au
temps courant
5-3

{$G_{iP}(t)$}

Comparaison en gisement des
angles reçus au temps
courant t et des angles prédits
au temps courant
5-4

Détection de la meilleure
correspondance entre les
angles prédits et reçus
5-5

[Fig.6]

Fig.6A

Fig.6B

(𝒯) Trajectoire du mobile

[Fig.7]

Point de passage P0
sur la trajectoire

{Ephémérides}
des émetteurs

Détermination des émetteurs
visibles au point de passage
P₀, à l'instant courant t

Positions émetteurs à t0

7-1

{Ei}          P0

Azimut de la direction
de la trajectoire au
point P0 [Az(P₀)]

Calcul de la direction en
gisement $G_{iP0}(t)$ de l'émetteur
{$E_i$} vu du point de passage
P₀, à l'instant courant t ou à
un instant prédit

Positions émetteurs à t0

7-2

{$G_{iP0}(t)$}

Vitesse longitudinale
du mobile sur la trajectoire

Calcul de la compensation de
phase de l'antenne en
gisements {$G_{iP0}(t)$}

Doppler émetteurs

7-3

Intégrations temporel
cohérente et non cohérente

7-6

Compensation de phase de porteuse

Signal reçu {$S_{tP}$} au
temps courant t pour
la position courante
du mobile

Filtrage spatial du signal reçu
par formation de voies
adaptées aux angles de
gisements {$G_{iP0}(t)$}

7-4

Acquisition en aveugle des
retard et doppler des signaux
après filtrage spatial

7-5

Cumul multisatellites au
temps courant

7-7

Détection de passage par
Maximum au centre ($\frac{\Sigma_t}{\Delta_t}$)

7-8

[Fig.8]

Fig.8A

Fig.8B

[Fig.9]

```
Point de passage P0          {Ephémérides}
sur la trajectoire           des émetteurs

┌─────────────────────────┐
│ Détermination des émetteurs │◄──────────
│ visibles au point de passage │
│ P₀, à l'instant courant t │ 9-1
└─────────────────────────┘
        │  {Ei}        │ P0

Azimut de la direction   ┌─────────────────────────┐
de la trajectoire au     │ Calcul de la direction en │
point P0 [Az(P₀)]        │ gisement G_iP0(t) de l'émetteur │
      ────────────────►  │ {E_i} vu du point de passage │
                         │ P₀, à l'instant courant t ou à │  Direction émetteurs
                         │ un instant prédit │ 9-2 │◄──────────
                         └─────────────────────────┘
                              │ {G_iP0(t)}

Vitesse longitudinale    ┌─────────────────────────┐
du mobile sur la trajectoire │ Calcul de la compensation de │
      ────────────────►  │ phase de l'antenne en │
                         │ gisements {G_iP0(t)} │
                         │                    9-3 │
                         └─────────────────────────┘
                Compensation de phase de porteuse

Signal reçu {S_iP} au    ┌─────────────────────┐     ┌─────────────────────┐
temps courant t pour     │ Filtrage spatial du signal reçu │  │ Acquisition en aveugle des │
la position courante     │ par antenne synthétique │────►│ retard et doppler des signaux │
du mobile                │ adaptées aux angles de │     │ après filtrage spatial │
      ────────────────►  │ gisements {G_iP0(t)} 9-4 │     │                    9-5 │
                         └─────────────────────┘     └─────────────────────┘
```

┌─────────────────────────┐
│ Intégrations temporel │
│ cohérente et non cohérente │
│                    9-6 │
└─────────────────────────┘

┌─────────────────────────┐
│ Cumul multi-satellites au │
│ temps courant et détection de │
│ passage au maximum │
│                    9-7 │
└─────────────────────────┘

┌─────────────────────────┐
│ Détection de passage par │
│ Maximum au centre $(\frac{\Sigma_t}{\Delta_t})$ │
│                    9-8 │
└─────────────────────────┘

Doppler émetteurs

[Fig.10]

Point de passage P0
sur la trajectoire -------------- {Ephémérides}
des émetteurs

Modèles de correction
de propagation

Détermination des émetteurs
visibles au point de passage
P0, à l'instant courant t    10-1

{E₁}

{Ei}          P0

Azimut de la direction
de la trajectoire au
point P0 [Az(P₀)]

Calcul de la direction en
gisement G₁P0(t) de l'émetteur
{E₄} vu du point de passage
P₀, à l'instant courant t    10-2

Direction émetteurs

{G₁P0(t)}

Vitesse longitudinale
du mobile sur la trajectoire

Calcul de la compensation de
phase de l'antenne en
gisements {G₁P0(t)}, à
l'instant courant    10-3

Doppler émetteurs

Compensation de phase de porteuse

Signal reçu {S₁P} au
temps courant t pour
la position courante
du mobile

Filtrage spatial du signal reçu
adapté aux angles de
gisements {G₁P0(t)}    10-4

Adaptation du canal de
fréquence porteuse en
réception    10-6

{G₁P0(t)}

Calcul des dopplers relatifs
attendus {δF₁}    10-5

Compensation de fréquence
en réception

Calcul des retards de code des
signaux {Si} au point de
passage P0 à l'instant courant t    10-7

Codes d'étalement
d'émission{Ci(t)}

Filtrage adapté en retard de
code    10-8

Intégrations temporel
cohérente et non cohérente    10-9

Cumul multisatellites au
temps courant    10-10

Détection de passage par
Maximum au centre ($\frac{\Sigma_t}{\Delta_t}$)    10-11

[Fig.11]

Europäisches
Patentamt

European
Patent Office

Office européen
des brevets

## RAPPORT DE RECHERCHE EUROPEENNE

Numéro de la demande

EP 24 15 0997

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A,D | EP 3 306 272 A1 (THALES SA [FR]) 11 avril 2018 (2018-04-11) * le document en entier * ----- | 1-10 | INV. G01S5/02 G01S19/50 B61L25/02 |
| A | RU 2 458 358 C1 (ROSSIJSKAJA FEDERATSIJA OT IM KOTOROJ VYSTUPAET MIN OBORONY RF [RU] ET) 10 août 2012 (2012-08-10) * abrégé * * alinéas [0001] - [0026] * * figures 1-3 * ----- | 1-10 | G01C21/00 ADD. G01S5/08 G01S19/14 G01S19/21 G01S19/22 |
| A | US 2012/165038 A1 (SOMA PITCHAIAH [US] ET AL) 28 juin 2012 (2012-06-28) * alinéa [0057] * * alinéas [0067] - [0071] * * figure 7a * ----- | 1-10 | |
| A | MORALES-FERRE RUBEN ET AL: "A Survey on Coping With Intentional Interference in Satellite Navigation for Manned and Unmanned Aircraft", IEEE COMMUNICATIONS SURVEYS & TUTORIALS, IEEE, USA, vol. 22, no. 1, 23 octobre 2019 (2019-10-23), pages 249-291, XP011778016, DOI: 10.1109/COMST.2019.2949178 [extrait le 2020-03-09] * le document en entier * ----- | 1-10 | |

| | | DOMAINES TECHNIQUES RECHERCHES (IPC) |
|---|---|---|
| | | G01S B61L G01C |

Le présent rapport a été établi pour toutes les revendications

| Lieu de la recherche | Date d'achèvement de la recherche | Examinateur |
|---|---|---|
| Munich | 4 juillet 2024 | Haugg, Sabine |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 24 15 0997

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-07-2024

| Document brevet cité au rapport de recherche | | Date de publication | Membre(s) de la famille de brevet(s) | | Date de publication |
|---|---|---|---|---|---|
| EP 3306272 | A1 | 11-04-2018 | EP | 3306272 A1 | 11-04-2018 |
| | | | ES | 2869303 T3 | 25-10-2021 |
| | | | FR | 3057348 A1 | 13-04-2018 |
| | | | PT | 3306272 T | 05-05-2021 |
| | | | US | 2018100934 A1 | 12-04-2018 |
| RU 2458358 | C1 | 10-08-2012 | AUCUN | | |
| US 2012165038 | A1 | 28-06-2012 | AU | 2011352974 A1 | 30-05-2013 |
| | | | BR | 112013016780 A2 | 11-10-2016 |
| | | | CA | 2817247 A1 | 05-07-2012 |
| | | | CN | 103283273 A | 04-09-2013 |
| | | | EP | 2659701 A1 | 06-11-2013 |
| | | | KR | 20140003516 A | 09-01-2014 |
| | | | US | 2012165038 A1 | 28-06-2012 |
| | | | WO | 2012091877 A1 | 05-07-2012 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3306272 A1
- EP 2410352 A1

- FR 3038390 A1